# EUROPÄISCHE PATENTSCHRIFT

(11) **EP 2 125 169 B1**
(45) Veröffentlichungstag und Bekanntmachung des Hinweises auf die Patenterteilung: **05.09.2012**
(21) Anmeldenummer: 07856785.6
(22) Anmeldetag: 14.12.2007
(51) Int. Cl.: B01D 53/60, B01D 53/12, B01J 8/12

(54) **VERFAHREN UND VORRICHTUNG ZUM REINIGEN VON ABGASEN EINES SINTERPROZESSES VON ERZEN UND/ODER ANDEREN METALLHALTIGEN MATERIALIEN IN DER METALLERZEUGUNG**
METHOD AND DEVICE FOR PURIFYING THE FLUE GASES OF A SINTERING PROCESS OF ORES AND/OR OTHER MATERIAL-CONTAINING MATERIALS IN METAL PRODUCTION
PROCÉDÉ ET DISPOSITIF D'ÉPURATION DE GAZ RÉSIDUAIRES D'UN PROCESSUS DE FRITTAGE DE MINERAIS ET/OU D'AUTRES MATÉRIAUX MÉTALLIFÈRES DANS LA PRODUCTION DE MÉTAUX

(30) Priorität: 14.12.2006 WO PCT/EP2006/012062
(43) Veröffentlichungstag der Anmeldung: 02.12.2009
(73) Patentinhaber: Grochowski, Horst, 46149 Oberhausen (DE)
(72) Erfinder: Grochowski, Horst, 46149 Oberhausen (DE)
(74) Vertreter: Schumacher, Horst
(86) Internationale Anmeldenummer: PCT/EP2007/011048
(87) Internationale Veröffentlichungsnummer: WO 2008/071446

(56) Entgegenhaltungen:
- EP-A- 0 301 272
- EP-A2- 0 202 411
- DE-A1- 3 916 325
- JP-A- 60 061 024
- JP-A- 2000 102 719
- US-A- 4 500 501
- TSUJI K ET AL: "Combined desulfurization, denitrification and reduction of air toxics using activated coke - 2. Process applications and performance of activated coke" FUEL, IPC SCIENCE AND TECHNOLOGY PRESS, GUILDFORD, GB, Bd. 76, Nr. 6, Mai 1997 (1997-05), Seiten 555-560, XP004286851 ISSN: 0016-2361
- E. RICHTER, K. KNOBLAUCH, H JÜNTGEN: "mechanisms and kinetics of SO2 adsorption and NOx reduction on active coke" GAS SEPARATION AND PURIFICATION, Bd. 1, 1987, Seiten 35-43, XP002447260 UK
- D. OLSON, K. TSUJI, I. SHIRAISHI: "The reduction of gas phase air toxics from combustion and incineration sources using the MET-Mitsui-BF activated coke process" FUEL PROCESSING TECHNOLOGY, Bd. 65-66, 2000, Seiten 393-405, XP002447261

## Beschreibung

### TECHNISCHES GEBIET

Die Erfindung betrifft ein Verfahren zum Reinigen von Abgasen eines Sinterprozesses von Erzen in der Metallerzeugung gemäß dem Oberbegriff von Anspruch 1 sowie eine Vorrichtung zum Durchführen dieses Verfahrens gemäß dem Oberbegriff von Anspruch 11.

### TECHNOLOGISCHER HINTERGRUND

Beim Sintern von Erzmaterial wird dieses zusammen mit einem kleinteiligen kohlenstoffhaltigen Feststoff vermischt auf ein Sinterband aufgegeben und während des fortschreitenden Transportes auf dem Sinterband unter zumindest teilweisem Verbrennen des Feststoffes zu einem Austragsende transportiert. Alternativ wird das Ausgangsmaterial pellettiert oder brikettiert und danach gesintert. Verbrennungsluft wird zugeführt. Während des Sinterprozesses durchläuft das Einsatzmaterial einen Schwel- und zumindest teilweise einen Verbrennungsprozess durch den das Ausgangsmaterial zu größeren Stücken agglomeriert, d.h. gesintert wird. Durch den Verbrennungs- und Schwelprozess treten, durch zugeführte Verbrennungsluft vermehrt, aus dem Einsatzmaterial erhebliche Abgasmengen aus, die neben den Komponenten CO₂, gegebenenfalls CO, O₂, H2O und/oder N₂ eine ganze Reihe von Schadstoffkomponenten enthalten. Insbesondere sind dies Stickoxyde (NOₓ), SO₂, HCl, Dioxine, Furane, Stäube und aus dem Schwelprozess stammende sublimier- oder kondensierbare Rückstände, schwere Kohlenwasserstoffe und/oder Schwermetalle.

Studien zur Luftreinhaltung haben ergeben, dass die Abgase z.B. von Sinterbändem einen ganz erheblichen Teil der gesamten Verunreinigungen enthalten, die bei der Stahlerzeugung insgesamt anfallen. So wurden im Bereich der Dioxine und Furane Verunreinigungsanteile von über 90% an den entsprechenden Emissionen bei der Eisen- und Stahlerzeugung festgestellt. Wegen der außerordentlich großen Abgasmengen an Sinterbandanlagen, ist eine zufrieden stellende Gasreinigung bisher nur mit sehr erheblichem, die Stahlerzeugung insgesamt spürbar verteuerndem Aufwand möglich. Insbesondere ist es aufgrund der unterschiedlichen Anteile der Schadstoffkomponenten im Sinterbandabgas sowie dessen je nach Einsatzmaterial stark schwankende Zusammensetzung, aber auch wegen der sehr unterschiedlichen Reaktionen der Schadstoffkomponenten und den zur Verfügung stehenden Reinigungsverfahren erforderlich gewesen, eine Vielzahl von Reinigungsschritten hintereinander zu schalten.

So sind z.B. so genannte Flugstromverfahren mit nach geschalteter Ausfilterung der Flugstrompartikel und weiter nach geschalteter katalytischer Oxydation zur Dioxinverminderung vorgeschlagen worden. Bei diesen Verfahren stellte sich eine erhebliche Katalysatorschädigung ein, die insbesondere als Oberflächenbelegung des Katalysators mit organischen Kohlenwasserstoffen auftritt (Abschlussbericht 50 441-5/217 "Verringerung von Dioxinemissionen aus Sinteranlagen" im Auftrag des deutschen Bundesumweltamtes, Dezember 2002).

Ein anderes Abgasreinigungsverfahren für Sinterbandanlagen ist in der WO 01/17663 vorgeschlagen worden, und zwar in der Weise, dass das Sinterbandabgas in einer Flugstrom-Reinigungsstufe mit einer nachfolgenden Adsorptionsreinigungsstufe gereinigt wurde, wobei in der Flugstromreinigungsstufe dem Abgas hochwertiger Aktivkoks in gemahlener Form, d.h. mit relativ geringer Partikelgröße unter Ausbildung einer Flugstromwolke aufgegeben wurde. Das feinteilige Adsorptionsmittel reagiert in der Flugstromphase mit einem Teil der zu entfernenden Schadstoffkomponenten aus dem Sinterbandabgas. Als Nachreaktionsstufe für den Flugstromprozess wurde der Flugstaub aber nicht auf einem Tuch- oder einem Elektrofilter niedergeschlagen, sondern an der Eintragsseite eines Gegenstromwanderbettreaktors, wo sich der Flugstaub an den Partikeln des Wanderbettschüttgutes, d.h. an deren Oberflächen oder in deren Zwischenkomvolumina niederschlug. Nachfolgend durchströmte das Sinterbandabgas die Partikelschicht des Gegenstromwanderbettreaktors, aus z.B. Aktivkoks, so dass das in der Flugstromphase vor gereinigte Sinterbandabgas nunmehr eine Adsorptionsreinigung erfuhr. Der der Wanderbettreaktor vor geschaltete Flugstromreinigungsprozess erfordert den Einsatz eines zweiten partikelförmigen Reinigungsmittels ohne dass dadurch bereits die nachteilige Katalysatorschädigung im Wanderbett unterbunden wurde.

Vor allem wenn eine Entfernung des NOₓ aus dem Sinterabgas im Vordergrund steht, haben sich andere Schadstoffkomponenten, wie SO₂ und HCL als besonders störend erwiesen, wenn das NOₓ mit Hilfe eines Katalysators aus dem Abgas entfernt werden soll, denn diese und andere im Sinterabgas enthaltenen Schadstoffkomponenten sind so genannte Katalysatorgifte für die NOₓ-Entfernung.

In der WO 2006/084671 A1 wurde daher eine Vorreinigungsstufe zum weitestgehenden Entfernen von vor allem SOx und HCl und als Nachreinigungsstufe ein von einem Katalysator zur NOx-Abscheidung, wie einem kohlenstoffhaltigen Adsorptionsmittel, von oben nach unten durchwanderter Gegenstromreaktor verwendet. Hierbei wurde, in einer einzigen Adsorptions- und/oder Absorptionsmittelschicht ein zweistufiger Abgasreinigungsprozess durchgeführt in dem die erste Stufe im Eingangsbereich und die zweite Reinigungsstufe in den nachfolgenden Zonen der Adsorptions- und/oder Absorptionsmittelschicht durchgeführt wurde. Es hatte sich nämlich herausgestellt, dass auch eine Vorreinigungsstufe, in der z.B. das SO₂ mit Kalziumhydroxid abgeschieden wird, nicht ausreichen würde, weil die im Abgas verbleibende Restmenge an SO₂ und/oder HCl, wenn sie mit Ammoniak, das zur NOₓ-Umwandlung erforderlich ist, in Berührung kommt, dazu führt, dass die Katalysatorkömer des NOₓ-Katalysators, soweit es sich dabei um kohlenstoffhaltige Absorptions- und/oder Adsorptionsmittel, wie z. B. Aktivkoks, handelt, sich dadurch aufblähen können (Popkombildung). Dieser Effekt tritt ein, wenn sich Ammoniumsulfat- oder Ammoniumchloridkristalle in dem porösen Katalysator bilden. Die Ausdehnung der sich bildenden Kristalle im Porensystem sprengt das Gefüge des Katalysators. Der Katalysator wird also nicht nur verbraucht, sondern auch desintegriert. Partikelgrößenverkleinerungen in der Katalysatorschüttung führen im Übrigen zu einem Anstieg des Druckverlustes und mithin zu einer weiteren Verteuerung des Reinigungsprozesses. Da - gemäß der WO 2006/084671 A1 - der so geschädigte Katalysator der unteren Reinigungsstufe des einzigen Reaktorbettes immer wieder am unteren Boden aus dem einzigen Reaktorbett ausgeschleust wurde, wurde eine ausreichende Gesamtreinigung des Sinterbandabgases erreicht. Zur Vorreinigung des Sinterabgases vor dessen Eintritt in die Wanderbettreaktoranlage wurde bevorzugt ein Schlauchfilter oder ein Elektrofilter und/oder ein Abgaswäscher eingesetzt. Alternativ oder ergänzend konnte dem Sinterabgas im Flugstrom fein verteiltes Reaktionsund/oder Absorptionsmittel, wie Kalkstaub und/oder Aktivkoksstaub zugesetzt werden, um das Sinterabgas zumindest von einem Teil der Schadstoffkomponenten SO₂ und HCl vor Eintritt in die Wanderbettreaktoranlage zu befreien. Bevorzugt enthielt das vor gereinigte Sinterabgas bei Eintritt in die Wanderbettreaktoranlage einen SO₂-Gehalt von weniger als 100 mg pro Normkubikmeter, vorzugsweise nicht mehr als 5 mg pro Normkubikmeter.

Diesen bekannten Vorreinigungsstufen ist gemeinsam, dass ein erheblicher apparativer Aufwand hierfür getrieben werden muss und ein weiteres Verbrauchsmaterial, wie Kalk, eingesetzt und nachfolgend entsorgt oder welterverarbeitet werden muss. Im Falle von Nasswaschverfahren sind außerdem Korrosions-, Wiederaufheizungsprobleme und /oder Wasseraufbereitungsprobleme zu bewältigen.

Aus der DE 39 16 325 A1 desselben Anmelders ist eine mehrstufige Wanderbettreaktoranlage bekannt, bei der die Schüttgüter aus den unterschiedlichen übereinander angeordneten Wanderbetten am unteren Reaktorende getrennt voneinander abgezogen werden. Die Adsorptionsmittel aus den unterschiedlichen Wanderbetten durchwandern daher also nicht die gleichen Adsorptionszonen. Auch sind keine Maßnahmen vorgesehen, die es gestatten, die Hauptmenge an SOx aus dem Abgas In der unteren Schicht zu absorbieren. Eine Steuerung der Beladungsmenge mit SOx in der oberen Schicht ist ebenfalls nicht vorgesehen.

### DARSTELLUNG DER ERFINDUNG

Davon ausgehend liegt der Erfindung die Aufgabe zugrunde, bei der Reinigung von Sinterabgasen, insbesondere sowohl von SOx und /oder HCl sowoe auch von NOₓ, den Einsatz einer ein weiteres Verbrauchsmaterial verwendenden Vorreinigungsstufe zu vermelden. Zur Lösung dieser Aufgabe wird ein Verfahren mit den Merkmalen des Anspruchs 1 sowie eine Vorrichtung mit den Merkmalen des Anspruchs 11 vorgeschlagen.

Demnach sieht die Erfindung vor, das Sinterabgas, gegebenenfalls nach einer Vorentstaubungsstufe, in einen Wanderbettreaktor von unten zunächst durch einen unteren horizontalen Gas-Anström- und Schüttgut-Abzugsboden des Wanderbettreaktors in eine untere Schicht von bereits mit NOx bzw. N₂ und ggf. Wasserdampf sowie SOx und/oder HCl sowie ggf. weiteren Schadstoffkomponenten beladenem Adsorptionsund/oder Absorptionsmittel einströmen und beim Durchströmen der untere Adsorptionsund/oder Absorptionmitttelschisht zumindest die Hauptmenge an SOx- und/oder HCl-Bestandteilen sowie ggf. weiteren Schadstoffkomponenten aus dem Sinterabgas im Porensystem des mit NOx bzw. N₂ beladenen Adsorptions- und/oder Absorptionsmittels adsorbieren zu lassen. Das von der Hauptmenge an SOx- und ggf. weiteren Schadstoffkomponenten gereinigte Sinterabgas verlässt die untere Adsorptions- und/oder Absorptionsmittelschicht an deren oberen freien Oberfläche um nachfolgend zur Umwandlung des NOx In z.B. N₂ und Wasserdampf Innig mit einer ammoniumhaltigen Verbindungen, wie Ammoniak oder Hamstoff, gemischt zu werden. Das mit der ammoniumhaltigen Verbindung gemischte, von der Hauptmenge an SOx- und/oder HCl-Bestandtellen gereinigte Sinterabgas strömt von unten durch einen oberen horizontalen Gas-Anström- und Schüttgut-Abzugsboden desselben wanderbettreaktors In eine obere Schicht von bereits mit NOx bzw. N₂ und geringen Mengen an SOx und ggf. weiteren Schadstoffkomponenten beladenem Adsorptions- und/oder Absorptionsmittel ein. Beim Durchströmen der oberen Adsorptions- und/oder Absorptionsmittelschicht adsorbiert zumindest die Hauptmenge an NOx-Bestandteilen aus dem Sinterabgas und der mindestens einen ammoniumhaltigen Verbindung auf der Oberfläche des mit NOx bzw. N₂ und geringen Mengen an SOx und ggf. weiteren Schadstoffkomponenten beladenen Adsorptions- und/oder Absorptionsmittels der oberen Schicht. Das von der Hauptmenge an SOx- und ggf. weiteren Schadstoffkomponenten sowie NOx-Bestandteilen gereinigte Sinterabgas verlässt die obere Adsorptions- und/oder Absorptionsmittelschicht an deren oberen freien Oberfläche um nachfolgend den Prozess zu verlassen. Frisches und/oder regeneriertes Adsorptions- und/oder Absorptionsmittel wird über einen Schüttgut-Verteilboden am oberen Ende des Wanderbettreaktors an der oberen freien Oberfläche der oberen Schicht des Adsorptions- und/oder Absorptionsmittels von oben zugeführt und gleichmäßig verteilt. Das Adsorptions- und/oder Absorptionsmittel durchwandert - ohne Unterbrechung durch Absperrorgane im Bereich des oberen Gas-Anström- und Schüttgut-Abzugsbodens - die obere und untere Schicht des gesamten Wanderbettreaktors allmählich und vollständig von oben nach unten und wird dabei sukzessive zunächst mit NOx bzw. N₂ und Wasserdampf an seiner Oberfläche und nachfolgend mit SOx und ggf. weiteren Schadstoffkomponenten in seinem Porensystem beladen. Nachfolgend durchwandert es den unteren Gas-Anström- und Schüttgut-Abzugsboden des Wanderbettreaktors. Die Nachführung, der Abzug sowie die Wandergeschwindigkeit des Adsorptionsmittel- und/oder Absorptionsmittels erfolgt bevorzugt absatzweise (oder kontinuierlich) über Schüttgutaustragsorgane unterhalb des oder an dem unteren Gas-Anström- und Schüttgut-Abzugsboden. Die Beladungsmenge des Adsorptions-und/oder Absorptionsmittels in der oberen Schicht des Wanderbettreaktors mit SOx und ggf. weiteren Schadstoffkomponenten wird durch entsprechendes Betätigen der Schüttgutaustragsorgane unterhalb des oder an dem unteren Gas-Anström- und Schüttgut-Abzugsboden auf einen vorgebbaren, auf das beladene Adsorptions- und/oder Absorptionsmittel bezogenen Mengenanteil eingestellt.

Durch die Erfindung wird eine erhebliche Verfahrensvereinfachung bei gleichzeitig bis zu 100%iger Nutzung der Adsorptions-/Absorptions-Kapazität des verwendeten Adsorptions-/Absorptionsmittel bei vollständig ausreichendem Abscheidegrad an NOx und SOx und/oder HCl sowie gegebenenfalls weitere Schadstoffen in einem einzigen Zwei-Stufen-Gegenstromwanderbettreaktor erreicht. Auch die in dem Sinterabgas nach Vorreinigung noch vorhandenen, dem Wanderbettreaktor zuströmenden Staubmengen werden in ausreichendem Umfange mitentfernt. Diese Leistungsfähigkeit überrascht angesichts der Tatsache, dass ältere adsorptive Verfahren zur gleichzeitigen Entfernung von SOx und NOx aus Kohle-Kraftwerksabgasen einen etwa doppelt so hohen Adsorptionsmittelumlauf benötigten, obwohl Kraftwerksabgase wegen des hohen Ausbrandes der eingesetzten Kohle deutlich weniger begleitende Schadstoffe als Sinterbandabgase enthalten. Ebenso überraschend ist die vorerwähnte Leistungsfähigkeit des erfindungsgemäßen Verfahrens im Vergleich zu dem in der WO 2006/084671A1 beschriebenen Prozess mit Entfernung des SOx in einer Vorreinigungsstufe. Bei diesem bekannten Verfahren müssten mehrere Tonnen Kalk pro Tag in die Vorreinigungsstufe umgewälzt werden. Demgegenüber erreicht die Erfindung einen vergleichbar hohen Grad an SOx-Entfernung aus dem Abgas, obwohl die Abscheidung des SOx an dem bereits mit NOx und weiteren Schadstoffen vorbeladenen Adsorption-/Absorptionsmittel bei Anwesenheit einer ammoniumhaltigen Verbindung stattfindet. Dennoch ist die Prozessführung vergleichsweise einfach und Störungen beim Wanderungsprozess des Adsorptions-/Absorptionsmittels durch den zweistufigen Wanderbettreaktor werden vermieden. Der Abzug an verbrauchten und die Nachfüllung an frischem Adsorptions-/Absorptionsmittel wird lediglich über unten am Wanderbettreaktor sich befindende Schüttgutabzugsorgane gesteuert, und zwar in dem Maße, dass die Beladung der oberen Adsorptions-/Absorptionsmittelschicht auf eine bestimmte SOx und/oder HCl Menge begrenzt wird.

Wenn der Beladungswert des Adsorptionsmittels und/oder Absorptionsmittels des Wanderbettreaktors in der oberen Schicht mit SOx und/oder HCl auf einen maximalen Wert von 10 Gewichts%, vorzugsweise auf maximal 6 Gewichts%, bezogen auf das Gewicht des an den Schüttgutaustragsorganen abgezogenen Adsorptions-/Absorptionsmittels begrenzt wird, erfolgt in der oberen Schicht eine besonders hohe NOx-Abscheidung aus dem Sinterabgas ohne, dass eine die SOx- und/oder HCl- Entfernung in der unteren Adsorptions- und/oder Absorptionsmittelschicht des Wanderbettreaktors behindernde Schädigung des Adsorptions-/Absorptionsmittels stattfindet. Diese Begrenzung erfolgt dadurch, dass die Durchwanderung des oberen Gasanström- und Schüttgutabzugsbodens vom unteren Ende des Wanderbettreaktors her an den Schüttgutabzugsorganen gesteuert wird.

Wenn ein kohlenstoffhaltiges Adsorptions-/Absorptionsmittel verwendet wird, können besonders hohe Abscheidegrade aus dem Sinterabgas zu entfernenden Schadstoffen erreicht werden. Wenn es sich bei dem Adsorptions- und/oder Absorptionsmittel um einen Aktivkoks handelt, wird hierdurch eine günstige Verschleißfestigkeit des Adsorptions-/Absorptionsmittels auf seinem Weg durch den zweistufigen Wanderbettreaktor mit seinen beiden Anström- und Abzugsböden und den Abzugsorganen erreicht. Sofern ein geformter Aktivkoks verwendet wird, werden dadurch günstige Strömungsverhältnisse und ein geringerer Druckverlust in den beiden Adsorptions-/Absorptionsmittelschichten erreicht. Die Partikelgrößen des kohlenstoffhaltigen Adsorptions-/Absorptionsmittels können grundsätzlich in breitem Umfang variieren. Bevorzugt wird allerdings, allzu große Partikel sowie so genanntes Unterkom in Gestalt von Staub- und Bruchstücken möglichst zu vermeiden. Partikelgrößen zwischen überwiegend 1 und 10 mm haben sich als besonders günstig erwiesen. Ein engeres Spektrum, vorzugsweise zwischen 3 und 8 mm wird jedoch bevorzugt. Für die NOx- Entfernung sowie die Entfernung von SOx und/oder HCl an demselben Adsorptions-/Absorptionsmittel haben sich Partikelgrößen- zwischen 4 und 6 mm, vorzugsweise in der Größenordnung von 5 mm, als besonders wirkungsvoll erwiesen.

Während das Adsorptions-/Absorptionsmittel nach einem Durchgang durch den Wanderbettreaktor gänzlich verworfen, insbesondere auf dem Sinterband verbrannt werden kann, erweisen sich hochwertigere kohlenstoffhaltige Adsorptions-/Absorptionsmittel als besonders vorteilhaft, weil sie trotz der bei der Erfindung besonders hohen Schadstoffbeladung nach einem Regenerationsschritt erneut einsetzbar sind. Sofern als frisches Adsorptions-/Absorptionsmittel ein so genanntes Voraktivat eingesetzt wird, welches mit bereits regeneriertem Aktivkoks gemischt dem Wanderbettreaktor von oben zugeführt wird, können an die Aktivität des Adsorptions-/Absorptionsmittels im frischen Zustand geringere Anforderungen gestellt werden, weil in Folge mehrfacher Umläufe des Aktivkokses mit jeweiliger Desorption und Regeneration nach jedem Umlauf durch den Wanderbettreaktor eine ausreichend hohe Endaktivität erreichen.

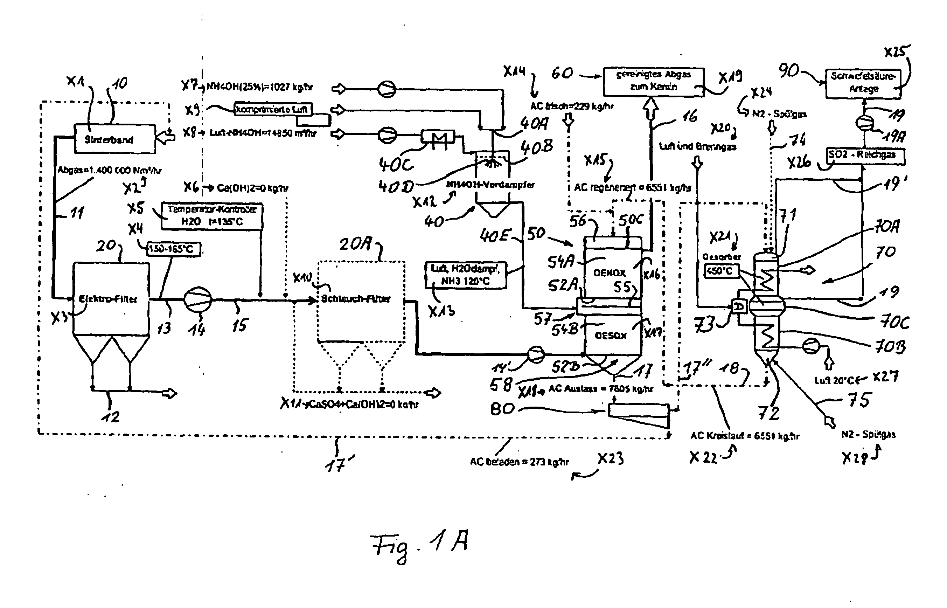

Die Regeneration erfolgt bevorzugt dadurch, dass der Regenerationsschritt in einem 3-stufigen Prozess erfolgt, in dem der mit Schadstoff beladene Aktivkoks aus dem Wanderbettreaktor in einer vertikal erstreckten Regenerationsanlage von oben zunächst durch einen indirekt beheizten Desorber, wie einen Röhrendesorber, geführt und nachfolgend von oben durch eine Nachentgasunszone unter Absaugen von desorbiertem Schadgas und schließlich von oben durch einen indirekt gekühlten Kühler geleitet wird. Sie ist in dieser Form von eigenständiger erfinderischer Bedeutung und kann wahlweise gemäß der in einem Ausführungsbeispiel zu Fig. 1A beschrieben Einzelmaßnahmen näher ausgeführt werden.

Das erfindungsgemäße Verfahren kann als vollständig trockenes Gasreinigungsverfahren Anwendung finden, so dass Probleme mit Nasswäschem und dergleichen sowie Aufheizungsprobleme entfallen. Die vorzugsweise oberhalb 80° und günstigerweise in einem Temperaturbereich von 80° bis 180° liegenden Gastemperaturen im Wanderbettreaktor gestatten eine erhebliche Flexibilität der Prozessführung, wobei Gastemperaturen zwischen 50° und 150° vorzugsweise zwischen 130° und 150° besonders günstige Gasreinigungswerte ergeben.

Die Höhe der oberen und unteren Adsorptionsmittelschicht im Wanderbettreaktor ist über den Reaktorquerschnitt äußerst gleichmäßig, wenn ein Gasanström/Schüttabzugsboden gemäß WO 88/08746A1 verwendet wird. Grundsätzlich kann die Schichthöhe in einem Wanderbettreaktor auch nachträglich noch verändert werden, indem Schüttgutzuteilrohre oberhalb der jeweiligen Schicht zu Gunsten bzw. zu Lasten der Größe des Gasabzugsraumes verlängert oder verkürzt werden können. Üblicherweise wird man aber feste Schichthöhen wählen. Diese liegen bei der vorliegenden Erfindung in der oberen Schicht zwischen etwa 1,5 und 4,5 m, vorzugsweise zwischen 2,5 und 3,5 m und ganz besonders bevorzugt bei etwa 3 m. Die Höhe der unteren Schicht ist vorzugsweise etwas geringer und liegt in der Größe zwischen 0,5 und 3 m, vorzugsweise zwischen 1,5 und 2 m und ganz besonders bevorzugt bei etwa 1,75 m. Diese Schichthöhen und die Schichthöhenunterschiede (zwischen der oberen und unteren Schicht) gestatten eine einfache Prozessführung auch bei sich ändernden Gaszusammensetzungen des Sinterabgases.

Eine Ammonium haltige Verbindung zur NOx-Umwandlung und Adsorption an einem Schüttgut wird vorzugweise dadurch hergestellt, dass einer Mischung von einer Ammonium enthaltenden Lösung, wie einer NH4OH-Lösung und komprimierter Luft, eine erhitzte weitere Mischung aus einer Ammonium enthaltenden Lösung und Luft in einem Verdampfer unter Bildung eines Luft/H2O-Dampf/NH3-Gasgemisches verdüst wird. Die Bildung eines Luft/H2O-Dampf/NH3-Gasgemisches ist in dieser Form von eigenständiger erfinderischer Bedeutung und kann wahlweise gemäß der in einem Ausführungsbeispiel zu Fig. 1A beschrieben Einzelmaßnahmen näher ausgeführt werden.

Unter Adsorption wird im Sinne der Erfindung ein Vorgang verstanden, bei dem eine oder mehrere Komponente/n aus dem Abgas unmittelbar adsorbiert wird/werden. Unter Absorption wird im Sinne der Erfindung verstanden, dass aus dem zu reinigenden Abgas stammende Stoffe zunächst eine chemische Reaktion unterlaufen und erst nachfolgend adsorbiert werden. Als Adsorptions- und/oder Absorptionsmittel werden - je nach Zusammensetzung des Sinterabgases - z.B. Aktivkoks (undotiert oder dotiert) oder Mischungen aus kohlenstoffhaltigem, undotiertem oder dotiertem Adsorptions- und/oder Absorptionsmittel, insbesondere Aktivkoks und einem Reaktionsmittel für saure Schadstoffkomponenten, wie Kalk, bevorzugt.

Das Verfahren kann - unabhängig von dem verwendeten Ad- und/oder Absorptionsmittel - in verschiedenen Betriebsweisen erfolgen:

Zum einen im Wege des Einmal-Durchlaufes, das heißt, dass Ad- und/oder Absorptionsmittel einen Wanderbettreaktor durch schrittweises Abziehen am unteren Reaktorende und schrittweises Nachfüllen am oberen Ende in einzelnen Schüttgutschichten ein einziges Mal den Wanderbettreaktor durchläuft und danach nicht wieder in dem Prozess eingesetzt wird. Diese Vorgehensweise empfiehlt sich bei Ad- und/oder Absorptionsmitteln mit sehr kleinem Stöchiometrie-Faktor und/oder geringen Feststoffbelastungen des zu reinigenden Fluides, insbesondere bei geringen Staubbelastungen.

Sind die Feststoff- und insbesondere Staubbelastungen des Fluides vergleichsweise hoch und/oder ist der Stöchiometriefaktor des weniger günstig, so können auch mehrere Umläufe des Ad- und/oder Absorptionsmittels durch den Wanderbettreaktor durchgeführt werden. Nach jedem Umlauf kann dann das Ad- und/oder Absorptionsmittel einer Behandlung zur Weiterverwendung unterzogen werden. Diese Behandlung kann z.B. sein: Sieben, wie mit einem Schwingsieb, mit anschließender oder gleichzeitiger Windsichtung zwecks Aberodierung, Unterkornabscheidung und/oder Staubabscheidung des an den Ad- und/oder Absorptionspartikeln anhaftenden Staubes oder Regenerieren oder Dotieren zur Auffrischung oder Verbesserung der katalytischen Eigenschaften. In beiden Verwendungsfällen (Einfach- oder Mehrfachverwendung) können hohe Gesamtverweilzeiten des Ad- und/oder Absorptionsmittels im Reaktor verwirklicht werden, wobei beim Einmal-Durchlauf die Verweilzeit in dem Reaktionsprozess besonders groß ist, d.h. die Wandergeschwindigkeit des Ad- und/oder Absorptionsmittels vom Eintritt zum Austritt relativ klein ist. Höhere Wandergeschwindigkeit des Ad- und/oder Absorptionsmittels durch den Reaktor ist zum Beispiel bei hohen Feststoffanteilen des zu reinigenden Fluides in der Regel erforderlich.

Durch die Erfindung wird es nun auch möglich, die Vorteile relativ kleiner, d.h. wirtschaftlich günstiger Stöchiometriefaktoren eines Sorptionsmittels in einer Vorrreinigungsstufe, zu nutzen, ohne diesen Vorteil mit einem relativ hohen Verbrauch an Ad-und/oder Absorptionsmittel zu "erkaufen". Dies wird dadurch erreicht, dass dem Sinterabgas in einer Vorreinigsstufe, insbesondere vor einem Schlauchfilter, ein Stoff aus der Gruppe Kalziumoxid, Kalziumhydroxid, Natriumbicarbonat und/oder dergleichen Alkali-oder Erdalkaliverbindung zum Binden einer Teilmenge des in dem Sinterabgas enthaltenen SOx, HS und/oder HCl zugegeben wird. Die bevorzugte Zugabemenge entspricht einem Stöchiometriefaktor zwischen 1,0 und 2,5 ,vorzugsweise zwischen 1,5 und 2,0. Die in der Vorreinigsstufe bevorzugt entfernte Teilmenge des SOx, HS und/oder HCl entspricht einem Anteil zwischen 10 und 90% , vorzugsweise zwischen 50 und 80%, und besonders bevorzugt zwischen 65 und 75 % des im Sinterabgas enthaltenen SOx, HS und/oder HCl. Dadurch wird der Verbrauch dieses Stoffes in der Vorreinigungsstufe, die auch als Filter für Staublasten und andere Schadstoffe im Sinterabgas dient, relativ gering zu halten, und den Verbrauch an dem vergleichsweise kostspieligen Ad-und/oder Absorptionsmittel spürbar zu senken.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel einer Sinterbandgasreinigung dargestellt ist.

In der Zeichnung zeigen
- Fig.1A: eine schematische Verfahrensdarstellung (Verfahrensfließbild) eines ersten Ausführungsbeispiels;
- Fig.1B: eine schematische Verfahrensdarstellung (Verfahrensfließbild) eines zweiten Ausführungsbeispiels;
- Fig. 2: ein einzelnes Reaktormodul schematisiert im perspektivischen Vertikalschnitt;
- Fig. 3: zwei übereinander geordnete Reaktormodule als Ausschnitt aus einer größeren Sinterabgasreinigungsanlage.

Bei dem Ausführungsbeispiel nach Fig. 1A wird das an einem Sinterband 10 anfallende Abgas über eine Rohrleitung 11 einem an sich bekannten Elektrofilter 20 zugeführt. Der dabei anfallende Staub wird über eine Rohrleitung 12 auf das Sinterband zurückgeführt. Das aus dem Elektrofilter bei etwa 150 bis 165°C abströmende Abgas wird über eine Rohrleitung 13 einem nachgeordneten Gebläse 14 zugeführt. Dieses sorgt für eine ausreichende Druckerhöhung für den Betrieb der Anlage. Das durch Rohrleitung 15 austretende Sinterabgas wird mit Wasser durch Verdampfung von Wasser zunächst auf ca. 135°C gekühlt und über ein Gebläse 14' einem im Gegenstrom arbeitenden Wanderbettreaktor 50 dem dortigen Gasanström-/Schüttgutabzugsboden 52B zugeführt. Das über Rohrleitung 16 austretende gereinigte Gas kann unmittelbar dem Abgaskamin 60 zugeführt und an die Atmosphäre abgegeben werden. Der Elektrofilter 20 kann wahlweise durch ein Schlauchfilter 20A ergänzt oder ersetzt werden.

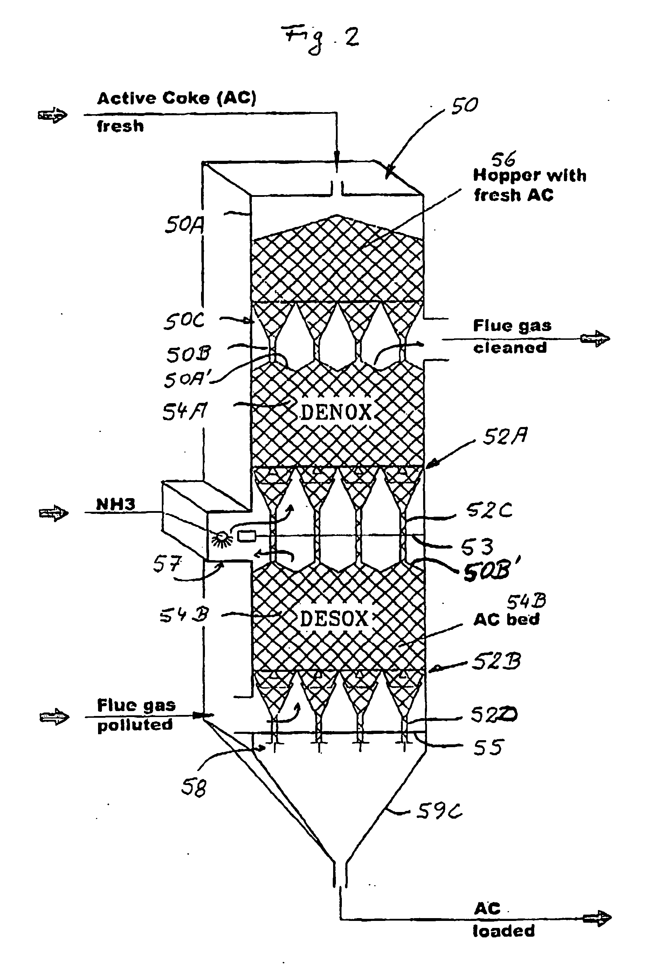

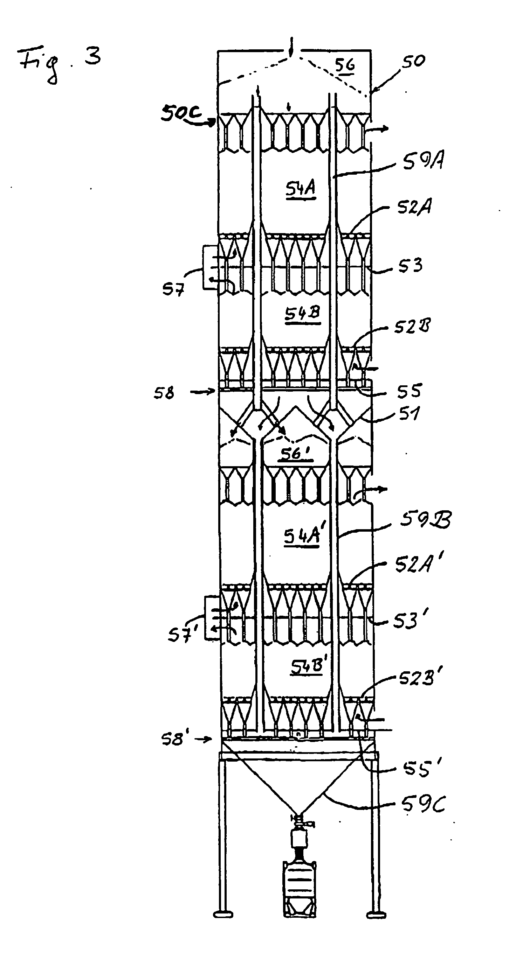

Die in der Wanderbettreaktoranlage-50-ausgebildeten-Schüttgutschichten 54A/B bestehen z.B. aus Aktivkokspartikeln. Reste an Staub, der auch den Elektrofilter 20 und/oder den Schlauchfilter 20A passiert hat - einschließlich Quecksilber und anderer Schwermetalle und ggf. weiterer Schadstoffe wie z.B. organische Verbindungen, insbesondere schwere Kohlenwasserstoffe, Dioxine, Furane u. a. werden unmittelbar im Anströmbereich, d.h. im Bereich eines unteren Anströmbodens 52B und ggf. einer unmittelbar darüberliegenden Partikelschicht adsorptiv, absorptiv bzw. adhesiv abgeschieden. Von der unteren Adsorptions-/Absorptionsmittelschicht 54B wird das Sinterabgas an einer seitlichen Umlenkstelle 57 aus dem Reaktor 50 ausgeschleust und mit NH₃ in einem länglichen Spalt intensiv durchmischt. Anschließend gelangt das Sinterabgas in den Reaktor 50 unter einen Anström-/Abzugsbogen 52A und darüber in die obere Adsorptions-/Absorptionsmittelschicht 54A zur Entstickung zurück. Das über dem Vorratsbunker 56 zugeführte Adsorption-/Absorptionsmittel wandert, wie nachfolgend zu Figur 2 und 3 zu erläutern, nacheinander durch beide Adsorptionsmittelschichten 54A/B nach unten zum Ausgang. In der oberen Adsorptionsmittelschicht 54A enthält das Sinterabgas im wesentlichen nur noch NOₓ, Dioxine/Furane und etwaige weitere Schadstoffbestandteile, wie z.B. PCBs und/oder PAKs, die nunmehr an dem von oben kommenden frischen bzw. regenerierten Adsorptions- bzw. Absorptionsmittel gebunden werden. Hierbei werden unter der katalytischen Wirkung des Aktivkokses aus NOₓ und NH₃ im wesentlichen Wasserdampf und Stickstoff gebildet. Das NH₃ wird in einer Anlage 40 erzeugt, in welcher NH₄OH mit Druckluft vermischt eingedüst wird. Die NH₃-Zugabe-Anlage 40, die von eigenständiger erfinderischer Bedeutung ist, arbeitet vorzugsweise wie folgt:

Eine 25 %ige NH4OH-Lösung und komprimierte Luft werden bei 40A gemischt. Die Mischung gelangt über ein Rohr in das Verdampferinnere nach unterhalb eines Düsenbodens 40B, wie eines Lochbodens. Der innerhalb des Verdampfers sich befindende Düsenboden 40B wird auf seiner Oberseite von einem Luft-NH4OH-Gemisch beaufschlagt, welches über den Düsenboden gleichmäßig auf das Verdampferinnere verteilt wird. Dieses Gemisch ist mittels eines Wärmeraustauschers 40C zuvor ausreichend aufgeheizt worden. Das von der Mischstelle 40A einer Vernebelungsdüse 40D unterhalb des Düsenbodens 40B zugeführte, nicht erwärmte Gemisch aus NH4OH und komprimierter Luft wird durch das aufgeheizte Luft-NH4OH-Gemisch, das am Düsenboden 40B ansteht, verdampft, so dass am unteren Verdampferende ein Luft/H2O-Dampf/NH3-Gemisch bei etwa 120°C in eine Speiseleitung 40E eintritt, die die Umlenkstelle 57 des Wanderbettreaktors 50 und das dort umgelenkte Sinterabgas mit dem genannten Gemisch versorgt.

Über Rohrleitung 17 wird der verbrauchte Aktivkoks einer Siebvorrichtung 80 zugeführt, von der das abgesiebte Feinkorn (Unterkom) über die Rohrleitung 17' zu Verbrennung dem Sinterband zugeführt wird um als Brennstoff im Sinterprozess zu dienen, während das anfallende Grobkorn über die Rohrleitung 17" einer an sich bekannten Regenerationsstufe 70 zugeführt wird, so dass Unterkom nicht in den Wanderbettreaktor 50 zurückgelangt. Die Regeneration 70 besteht aus einem mehrstufigen Reaktor, der von oben nach unten von dem beladenen Aktivkoks durchwandert wird. In einer oberen Vorentgasungsstufe 70A wird der Aktivkoks auf etwa 450°C erhitzt. In einer mittleren Nachentgasungsstufe 70C sich sammelndes SO₂ Reichgas wird abgeführt und über Rohrleitung 19 einer Entsorgung zugeführt, z.B. einer Schwefelsäure-Produktionsanlage 90. In der nach unten folgenden Kühlstufe 70B, werden nur noch geringe Schadstoffmengen freigesetzt. Von der Regenerationsanlage 70 wird das regenerierte Adsorptions-/Absorptionsmittel über Rohrleitung 18 wieder dem Vorratsbunker 56 des Wanderbettreaktors 50 zugeführt. Die Regenerationsanlage 70, die von eigenständiger erfinderischer Bedeutung ist, arbeitet im Einzelnen wie folgt:

Verbrauchter Aktivkoks aus dem Wanderbettreaktor 50 gelangt über die Siebvorrichtung 80 und Rohrleitung 17" in einen oben liegenden Vorratsbunker 71. Die darunter liegende Regenerationsstufe 70A ist als Röhrendesorber ausgebildet, d.h., dass am Boden des Vorratsbunkers 71 eine Vielzahl senkrechter Rohre nach unten abgehen, durch die der Aktivkoks wandern kann während diese Rohre auf ihrer Außenseite mit heißer Verbrennungsluft von etwa 450°C beheizt werden. Am unteren Ende der Regenerationsstufe 70A münden diese Rohre durch einen unteren Boden in einer querschnittsvergrößerten Kammer (Regenerationsstufe 70C), die als Nachentgasungszone bei etwa 450°C den Aktivkoks über eine Verweildauer von etwa 1 bis 2 Stunden aufnimmt. Der allmählich alle Regenerationsstufen von oben nach unten durchwandernde Aktivkoks gelangt am unteren Ende der Nachentgasungszone erneut in einen Röhrenreaktor (Regenerationsstufe 70B), der in seiner Bauart im wesentlichen dem Röhrendesorber der Regenerationsstufe 70A entspricht. Hier wird der Aktivkoks indirekt gekühlt, wobei als Kühlgas Luft bei Raumtemperatur auf der Außenseite der Kühlrohre verwendet wird. Am unteren Ende der Regenerationsstufe 70B münden die Aktivkoks führenden Rohre wieder frei in einen Bode. Von dort aus gelangt der Aktivkoks in den darunter liegenden Austragsbunker 72. Ohne Kontakt mit dem Aktivkoks wird die am unteren Ende der Regenerationsstufe 70B eingeführte zwanzig grädige Druckluft bis unterhalb der Regenerationsstufe 70C geführt. Von dort führt eine Rohrleitung die in der Kühlstufe vorgewärmte Luft zu einem Erhitzer 73, welcher mit Luft und Brenngas gespeist wird. Das heiße Verbrennungsgas/Luft-Gemisch gelangt dann - ohne direkten Kontakt zum Aktivkoks in das untere Ende der Regenerationsstufe 70A an deren oberen Ende die dann noch etwa 450°C heiße Luft die Regenerationsanlage 70 wieder verlässt.

Die mit dem beladenen Aktivkoks in die Aufheizstufe 70A gelangenden Schadstoffe desorbieren unter den gegebenen Temperaturbedingungen und der indirekten Aufheizung und können die Regenerationsanlage 70 sowohl im Bereich der Nachentgasungszone 70C über Rohrleitung 19 als auch über den Vorratsbunker 71 und Leitung 19' als SO2-Reichgas verlassen, wobei ein Sauggebläse 19A den erforderlichen Unterdruck erzeugt und das SO2-Reichgas z.B. an eine an sich bekannte Schwefelsäureproduktionsanlage 90 zur weiteren Aufbereitung weiterleitet. Das zur Rohrleitung 19' hin aufsteigende Desorptionsgas fördert die Wärmeübertragung auf den Aktivkoks innerhalb der außen beheizten Desorptionsrohre in der oberen Regenerationsstufe 70A. Es ist aber auch möglich und in der Zeichnung mit Rohrleitung 74 gestrichelt als Alternative dargestellt, Stickstoff haltiges Spülgas dem Vorratsbunker 71 aufzugeben und dieses Spülgas durch die Desorptionsrohre in die Nachentgasungszone 70C und von dort zur Schwefelsäureanlage 90 zu leiten. Um auch in der Kühlstufe 70B schadstoffhaltige Gase von dem Aktivkoks abzutreiben, und auch um die Wärmeübertragung in dieser Kühlstufe zu fördern, wird der Austragsbunker 72 über eine Rohrleitung 75 mit Stickstoff haltigem Spülgas beaufschlagt, welches über die Nachentgasungszone 70C aus der Regenerationsanlage 70 wieder abgezogen wird.

Eine typische Abgaszusammensetzung vor und nach der Abgasreinigung ist in der Tabelle dargestellt:

| | Rohgas | Reingas | |
|---|---|---|---|
| Dioxin | 3 bis 10 | 0,1 bis 0,5 | ng/m³ |
| SO2 | 700 | <50 | mg/m³ |
| HCl | 50 | <5 | mg/m³ |
| NOx | 350 | <100 | mg/m³ |

### Erstes Ausführungsbeispiel:

In einem ersten praktischen Ausführungsbeispiel werden (ohne einen Schlauchfilter zu verwenden) die in Figur 1A angegebenen Betriebsbedingungen hergestellt.

### Zweites Ausführungsbeispiel:

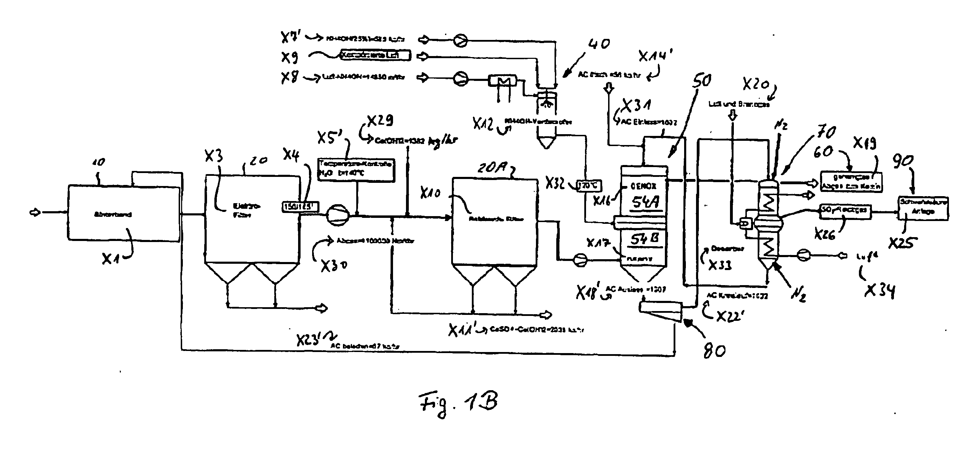

In einem zweiten praktischen Ausführungsbeispiel werden - bei Verwendung eines Schlauchfilters und in Übrigen ansonsten gleichem Aufbau wie nach Fig. 1A - die in Figur 1 B angegebenen Betriebsbedingungen hergestellt.

Bei dem Ausführungsbeispiel nach Fig. 1B sind u.a. der Aktivkoks-Verbrauch, die zu regenerierende Aktivkoks-Menge und die herzustellende H2SO4-Menge deutlich geringer als in dem Ausführungsbeispiel nach Fig. 1A.

Wie aus Figur 2 ersichtlich, besteht ein erfindungsgemäßer Wanderbettreaktor 50 in seiner einfachsten Form aus einem im Grundriss rechteckigen Behälter 50A, in den an seiner Oberseite Aktivkoks nachgefüllt wird, der sich in einem darüber gelegenen Vorratsbunker 56 befindet. Von dort wird der Aktivkoks über einen Schüttgutverteilboden 50C über rasterförmig angeordnete Schüttgutzuteilrohre 50B einer oberen Aktivkoksschicht 54A zugeführt wird. Dies geschieht ohne Absperrorgane, so dass eine reine Schwerkraftbefüllung vorliegt, die automatisch beendet wird, wenn die Oberfläche 50A' der oberen Aktivkoksschicht die Auslaufenden der Schüttgutzuteilrohre 50B erreicht. Zwischen den Schüttgutzuteilrohren entsteht ein Gasabzugsraum in an sich bekannter Weise. Am unteren Ende der oberen Aktivkoksschicht 54A befindet sich ein oberer Gasanström- und Schüttgutabzugsboden 52A in an sich bekannter Bauart, wie z.B. aus der WO 88/08746A1 bekannt. Durch diesen oberen Boden 52A wandert Schüttgut nach unten und strömt des Sinterabgases nach oben. Die an die rasterförmig angeordneten Schüttgutabzugstrichter anschließenden Schüttgutabzugsrohre 52C durchdringen einen Zwischenboden 53 und münden frei an der oberen Oberfläche der darunter befindlichen Aktivkoksschicht 54B. Auch hier sind Absperrorgane für den Aktivkoks nicht vorgesehen. Am unteren Ende der unteren Aktivkoksschicht 54B befindet sich ein unterer Gasanström- und Schüttgutabzugboden 52B etwa gleicher Bauart wie der Boden 52A. Die sich daran nach unten rasterförmig anschließenden Schüttgutabzugsrohre 52D durchdringen einen Zwischenboden 55 unterhalb dessen sich die einzigen Schüttgutabzugsorgane einer Austragsvorrichtung 58 des gesamten Moduls befinden. Solche Abzugsorgane sind unter anderem aus der WO 90/14156A1. bekannt. Der beladene Aktivkoks wird am unteren Reaktorende abgezogen.

Das zu reinigende Sinterabgas tritt bei einer Umlenkstelle 57 am Rande des Zwischenbodens 55 aus, wird mit NH3 innig durchmischt und tritt unter dem Gasanström-/Schüttgutabzugsboden 52B in die obere Schüttgutschicht 54A des Wanderbettreaktors 50 wieder ein.

Wie aus Figur 3 ersichtlich, kann ein Wanderbettreaktor 50 auch doppelstöckig ausgeführt sein. Er besteht dann im wesentlichen aus zwei übereinander angeordneten Modulen der in Figur 2 gezeigten Bauart. In Figur 3 sind die Bezugszeichen für das untere Modul durch ein " ' " ergänzt. Um einen einfachen Transport des Adsorptions-/Absorptionsmittels zu ermögtichen, gehen vom oben angeordneten Vorratsbunker 56 Schüttgutdurchleitungsrohre 59A aus, welche das obere der beiden Wanderbettreaktormodule vollständig durchsetzen und sich unterhalb der Austragsvorrichtung 58 hosenförmig auf einen unteren Vorratsbunker 56' verteilen, wobei ein Zwischenboden 51 für eine vollständige Trennung des dem unteren Vorratsbunker 56' zuströmendem frischen Adsorptions-/Absorptionsmittels von dem an der Austragsvorrichtung 58 ausgetragenen beladenen Adsorptions-/Absorptionsmittel sorgt. Dieses beladene Adsorptions-/Absorptionsmittel des oberen Reaktormoduls wird über Schüttgutdurchleitungsrohre 59B durch das untere Reaktormodul vollständig hindurchgeführt und gelangt so in einen Abzugstrichter 59C, durch den das beladene Adsorptions-/Absorptionsmittel beider Reaktormodule aus dem Wanderbettreaktor 50 ausgeschleust wird.

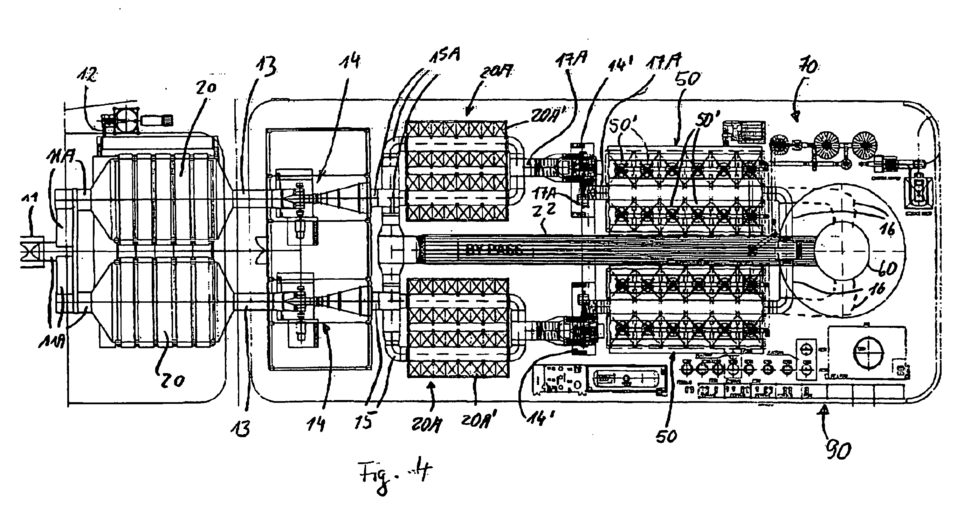

Ein praktisches Anlagenbeispiel nach Figur 4 zeigt die generelle Prozessführung nach Figur 1A, wobei gleichartige Teile gleich bezeichnet sind. Im Unterschied zu Figur 1A ist
- die Anlage zum Reinigen von Sinterbandabgas zweistrangig;
- die Elektro-Filter 20 sind mehrfeldrig, hier mit 5 Feldern jeweils, wobei in vorliegender Kombination auch 2 oder 3 Felder vor den Schlauchfiltern geschaltet sind;
- die Schlauchfilter sind mit vielen Kammern 20A' - hier in je 4 parallel geschalteten Schlauchfilterkammern 20A' zu jeweils mehreren Filterschläuchen - vorgesehen;
- nach den Gebläsen 14 können die Schlauchfilter 20 A und die Wanderbettreaktoren 50 durch eine Leitung 22 zum Kamin 60 by gepasst werden, um in Sonderfällen Störungen oder Schädigungen zu vermeiden;
- zusätzliche Gebläse 14' erzeugen den zum Überwinden des Druckverlustes in den nachfolgenden Wanderbettreaktor-Modulen 50', von denen einer in Figur 2 dargestellt ist und die auch mehrstöckig ausgeführt sein können, den erforderlichen Überdruck,
zum Herunterkühlen des Abgases auf die gewünschte Betriebstemperatur in der Abgasreinigungsanlage kann Umgebungsluft eingemischt und/oder Wasser zur Verdampfungskühlung eingedüst werden. Der Einmisch- und/oder Eindüsort kann vor dem/den Elektrofilter(n) und/oder vor Schlauchfiltern liegen. Bei besonderen Betriebszuständen des Sinterbandes auftretende oder vermehrt auftretende Schadstoffe, die auch klebrig sein können, wird zu deren Einfangen partikelförmiges Material - wie bekannt - dem Abgasstrom zugegeben. Dies kann vor dem Elektrofilter, vor dem Schlauchfilter und/oder dem Wanderbettreaktor(filter) geschehen, wobei das Material im Kreislauf der im Einmaldurchlauf geführt wird.

Bei der vorliegenden, für sehr große Gasvolumenströme vorgesehene Sinterbandabgasreinigungsanlage wird eine verbesserte Flexibilität durch eine variable Gasaufteilung auf eine und/oder mehrere Komponenten der Elektrofilter, der Schlauchfilter und/oder von zusammengefassten Wanderbettreaktor-Modulen erreicht (Rohre 11A, 15A, 17A und ggf. Absperrorgane).

Die Merkmale der Figuren können im Sinne der Erfindung einzeln oder in Kombination miteinander verwendet werden - sowohl im Rahmen des einzelnen Ausführungsbeispiels als auch bei verschiedenen Beispielen untereinander.

### Bezugszeichenliste:

- 10: Sinterband
- 11: Rohrleitung
- 12: Rohrleitung
- 13: Rohrleitung
- 14: Gebläse
- 15: Rohrleitung
- 16: Rohrleitung
- 17: Rohrleitung
- 17': Rohrleitung
- 17": Rohrleitung
- 18: Rohrleitung
- 19: Rohrleitung
- 19': Rohrleitung
- 19A: Gebläse
- 20: Elektrofilter
- 20A: Schlauchfilter
- 40: NH₃-Zugabe-Anlage
- 40A: Mischstelle
- 40B: Düsenboden
- 40C: Wärmeaustauscher
- 40D: Vemebelungsdüse
- 40E: Speiseleitung
- 50: Wänderbettreaktor
- 50A: Behälter
- 50A': Oberfläche
- 50B: Schüttgutzuteilrohre
- 50B': Oberfläche
- 50C: Schüttgutverteilboden
- 50C': Schüttgutverteilboden
- 51: Zwischenboden
- 52A, 52A': oberer Anström-/Abzugsboden
- 52B, 52B': unterer Ausström-/Abzugsboden
- 52C: Schüttgutabzugsrohre
- 52D: Schüttgutabzugsrohre
- 53, 53': Zwischenboden
- 54A, 54A': obere Schüttgutschicht
- 54B, 54B': Buntere Schüttgutschicht
- 55, 55': Zwischenboden
- 56: Vorratsbunker
- 56': unterer Vorratsbunker
- 57, 57': Umlenkstelle
- 58, 58': Austragsorgane
- 59A/B: Schüttgutdurchleitungsrohre
- 59C: Abzugstrichter
- 60: Kamin
- 70: Regenerationsanlage
- 70A, B, C: Regenerationsstufen
- 71: Vorratsbunker
- 72: Austragsbunker
- 73: Erhitzer
- 74: Rohrleitung
- 75: Rohrleitung
- 80: Siebvorrichtung
- 90: Schwefelsäure-Produktionsanlage

### Figurenbeschriftung Fig. 1A und 1B in Reinschrift

- X1: Sinterband
- X2: Abgas=1.400.000 Nm²/hr
- X3: Elektro-Filter
- X4: 150-165°C
- X5: Temperatur-Kontrolle: H2O t=135°C
- X5': Temperatur-Kontrolle: H2O t=140°C
- X6: Ca(OH)2=0 kg/hr
- X7: NH4OH(25%)=1027 kg/hr
- X7': NH4OH(25%)=589 kg/hr
- X8: Luft-NH4OH=14850 m²/hr
- X9: komprimierte Luft
- X10: Schlauch-Filter
- X11: CaSO4+Ca(OH)2=0 kg/hr
- X11': CaSO4+Ca(OH)2=2038 kg/hr
- X12: NH4OH-Verdampfer
- X13: Luft, H2Odampf. NH3 120°C
- X14: AC frisch=229 kg/hr
- X14': AC frisch=56 kg/hr
- X15: AC regeneriert = 6551 kg/ hr
- X16: DENOX
- X17: DESOX
- X18: AC Auslass = 7805 kg/hr
- X18': AC Auslass = 1907
- X19: gereinigtes Abgas zum Kamin
- X20: Luft und Brenngas
- X21: Desorber 450°C
- X22: AC Kreislauf = 6551 kg/hr
- X22': AC Kreislauf=1632
- X23: AC beladen 273 kg/hr
- X23': AC beladen 87 kg/hr
- X24: N2 - Spülgas
- X25: Schwefelsäure-Anlage
- X26: SO2 - Reichgas
- X27: Luft 20°C
- X28: N2 Spülgas
- X29: CH(OH)2=1382 kg/hr
- X30: Abgas=1100000/hr
- X31: AC Einlass
- X32: 120°C
- X33: Desorber
- X34: Luft

## Patentansprüche

1. Verfahren zum Reinigen von Abgasen , bei dem ein unter, zumindest teilweisem, Verbrannen eines zumindest teilwelse fester Brennstoffes entstehendes Abgas neben den Komponenten CO₂, CO, O₂, H₂O und/oder N₂ zumindest einige der folgende Schadstoffkomponenten enthält: NOx, SOx, HCl, HS, Hg, Dioxine, Furane, Stäube und aus einem Schweiprozess stammende sublimier- oder kondensierbare Rückstände, schwere Kohlenwasserstoffe und/oder Schwermetalle,
**dadurch gekennzeichnet dass**
- 1.1 das Abgas in einen im Gegenstrom arbeitenden Wanderbettreakbor von unten durch einen unteren horizontalen Gas-Anström- und Schüttgut-Abzugsboden des Wanderbettreaktors in eine untere Schicht von bereits mit NOx sowie SOx und/oder weiteren Schadstoffkomponenten beladenem Adsorptions- und/oder Absorptionsmittel einströmt und beim Durchströmen der untere Adsorptionsmittel- und/oder Absorptionsmitteischicht zumindest die Hauptmenge an SOx- aus dem Abgas im Porensystem des mit NOx und/oder N₂ beladenen Adsorptions- und/oder Absorptionsmittels adsorbiert,
- 1.2 das von der Hauptmenge an SOx und ggf. weiteren Schadstoffkomponenten gereinigte Abgas die untere Adsorptions- und/oder Absorptionsmittelschicht an deren oberen freien Oberfläche verlässt um nachfolgend zur Umwandlung des NOx innig mit einer Ammonium haltigen Verbindungen, wie Ammoniak oder Hamstoff, gemischt zu werden,
- 1.3 das mit der Ammonium haltlgen Verbindung gemischte, von der Hauptmenge an SOx gereinigte Abgas von unten durch einen oberen horizontalen Gas-Anström- und Schüttgut-Abzugsboden des Wanderbettreaktors in eine obere Schicht von bereits mit NOx und/oder N₂ beladenem Adsorptionsund/oder Absorptionsmittel einströmt und beim Durchströmen der oberen Adsorptions- und/oder Absorptionsmittelschicht zumindest die Hauptmenge an NOx-Bestandtellen aus dem Abgas und/oder deren Reaktionsprodukten auf der Oberfläche des mit NOx und/oder N₂ beladenen Adsorptions- und/oder Absorptionsmittels adsorblert,
- 1.4 das von der Hauptmenge an SOx- und ggf. weiteren Schadstoffkomponenten sowie NOx-Bestandteilen gereinigte Abgas die obere Adsorptions- und/oder Absorptionsmittelschlcht an deren oberen freien Oberfläche verlässt um nachfolgend den Wanderbettreaktorzu verlassen,
- 1.5 frisches und/oder regeneriertes Adsorptions- und/oder Absorptionsmittel über einen Schüttgut-Verteilboden am oberen Ende des Wanderbettreaktors der oberen freien Oberfläche der oberen Schicht des Adsorptlons- und/oder Absorptionsmittels gleichmäßig verteilt von oben zugeführt wird und ohne Unterbrechung durch Absperrorgane im Bereich des oberen Gas-Anström- und Schüttgut-Abzugsbodens nachfolgend die obere und untere Schicht des gesamten Wanderbettreaktors allmählich von oben nach unten vollständig durchwandert und dabei sukzessive zunächst mit NOx oder N₂ und Wasserdampf an seiner Oberfläche und nachfolgend mit Sox in seinem Porensystem beladen wird und nachfolgend den unteren Gas-Anström- und Schüttgut-Abzugsboden des Wanderbettreaktors durchwandert,
- 1.6 die Nachführung, der Abzug sowie die Wandergeschwindigkeit des Adsorptionsmittel- und/oder Absorptionsmittels über Schüttgutaustragsorgane der unteren Schicht des Wanderbettreaktors unterhalb des oder an dem unteren Gas-Anström- und Schüttgut-Abzugsboden erfolgt und
- 1.7 die Beladungsmenge des Adsorptions- und/oder Absorptionsmittels in der oberen Schicht des Wanderbettreaktors mit SOx durch entsprechendes Betätigen der Schüttgutaustragsorgane der unteren Schicht des Wanderbettreaktors unterhalb des oder an dem unteren Gas-Anström- und Schüttgut-Abzugsboden auf einen vorgebbaren, auf das beladene Adsorptions-und/oder Absorptionsmittel bezogenen Mengenantell eingestellt wird.

2. Verfahren nach Anspruch 1, **dadurch gekennzeichnet, dass** der Beladungswert des Adsorptions- und/oder Absorptionsmittels des Wanderbettreaktors in der oberen Schicht mit SOx und ggf. weiteren Schadstoffkomponenten auf maximal 10 Gew.-%, vorzugsweise auf maximal 6 Gew.-% bezogen auf das Gewicht des an den Schüttgutaustragsorganen abgezogenen Adsorptions-und/oder Absorptionsmittels begrenzt wird.

3. Verfahren nach Anspruch 1 oder 2, **dadurch gekennzeichnet, dass** als Adsorptions- und/oder Absorptionsmittel ein kohlenstoffhaltiges Adsorptions-und/oder Absorptionsmittel verwendet wird.

4. Verfahren nach Anspruch 3, **dadurch gekennzeichnet, dass** das kohlenstoffhaltige Adsorptions- und/oder Absorptionsmittel ein Aktivkoks ist.

5. Verfahren nach Anspruch 3 oder 4, **dadurch gekennzeichnet, dass** das kohlenstoffhaltige Adsorptions- und/oder Absorptionsmittel eine Partikelgröße von 1 mm bis 10mm, aufweist.

6. Verfahren nach einem der Ansprüche 3 bis 5, **dadurch gekennzeichnet, dass** das aus dem Wanderbettreaktor unten abgezogene verbrauchte oder teilverbrauchte Adsorptions- und/oder Absorptionsmittel in einem Regenerationsschritt von den ad- und/oder absorbieren Schadstoffen weitgehend befreit und zumindest teileise dem Wanderbettreaktor als Adsorptions- und/oder Absorptionsmittel allein oder gemischt mit frisch eingesetztem kohlenstoffhaltigen Adsorptions- und/oder Absorptionsmittel oben wieder aufgegeben wird.

7. Verfahren nach einem der Ansprüche 3 bis 6, **dadurch gekennzeichnet, dass** als frisch eingesetztes kohlenstoffhaltiges Adsorptions- und/oder Absorptionsmittel ein Voraktivat eingesetzt wird

8. Verfahren nach einem der Ansprüche 3 bis 7, **dadurch gekennzeichnet, dass** die Gasreinigung an dem Adsorption- und/oder Absorptionsmittel bei Temperaturen oberhalb 80°C erfolgt.

9. Verfahren nach einem der Ansprüche 3 bis 8, **dadurch gekennzeichnet, dass** die obere Schicht des Adsorptions- und/oder Absorptionsmittels in dem Wanderbettreaktor eine Höhe zwischen 1,5m und 4,5m aufweist.

10. Verfahren nach einem der Ansprüche 3 bis 9, **dadurch gekennzeichnet, dass**, die untere Schicht des Adsorptions- und/oder Absorptionsmittels in dem Wanderbettreaktor eine Höhe zwischen 0,5m und 3m aufweist.

11. Verfahren nach einem der Ansprüche 1 bis 10, **dadurch gekennzeichnet, dass** , eine Ammonium haltige Verbindung zur NOx-Umwandlung und Adsorption an einem Schüttgut hergestellt wird aus einer Mischung von einer Ammonium enthaltenden Lösung, wie einer NH4OH-Lösung, und komprimierter Luft, welche Mischung unter Zumischen einer erhitzten weiteren Mischung aus einer Ammonium enthaltenden Lösung und Luft in einem Verdampfer unter Bildung eines Luft/H2O-Dampf/NH3-Gasgemisches verdüst wird.

12. Verfahren nach einem der Ansprüche 1 bis 11, **dadurch gekennzeichnet, dass** , ein Regeneretionsschritt in einem 3-stufigen Prozess erfolgt, in dem das mit Schadstoff beladene Adsorptions- und/oder Absorptionsmittelaus dem Wanderbettreaktor in einer vertikal erstreckten Regenerationsanlage von oben zunächst durch einen Indirekt beheizten Desorber, wie einen Röhrendesorber, geführt und nachfolgend von oben durch eine Nachentgasunszone unter Absaugen von desorbiertem Schadgas und schließlich von oben durch einen indirekt gekühlten Kühler geleitet wird.

13. Verfahren nach einem der Ansprüche 1 bis 12, **dadurch gekennzeichnet, dass** dem Abgas in einer Vorreinigsstufe, ins besondere vor einem Schlauchfilter, ein Stoff aus der Gruppe Kalziumoxid, Kalziumhydroxid, Natriumbicarbonat und/oder dergleichen Alkali- oder Erdalkaliverbindung zum Binden einer Teilmenge des SOx, HS und/oder HCl zugegeben wird.

14. Verfahren nach Anspruch 13, **dadurch gekennzeichnet, dass** die Zugabemenge einem Stöchiometriefaktor zwischen 1.0 und 2,5 entspricht.

15. Verfahren nach Anspruch 13 oder 14, **dadurch gekennzeichnet, dass** die in der Vorreinigsstufe entfernte Teilmenge des SOx, HS und/oder HCl einem Anteil zwischen 10 und 90% des im Abgas enthaltenen SOx, HS und/oder HCl entspricht.

16. Vorrichtung zum Reinigen von Abgasen, bei dem ein zumindest teilweise fester Brennstoff unter, zumindest teilweisern, Verbrennen des Feststoffes und unter Durchlaufen eines Schweiprozesses gesintert wird, wobei das Abgas neben den Komponenten CO₂, CO, O₂, H₂O und/oder N₂ zumindest einige, der folgende Schadstoffkomponenten enthält:
NOₓ. SO₂, HCl, Hg, Dioxine, Furane, Stäube und aus dem Schweiprozess stammende sublimier- oder kondensierbare Rückstände, schwere Kohlenwasserstoffe und/oder Schwermetalle,
**gekennzeichnet durch,**
- einen mit einer unteren und einer oberen Adsorptionsmittel- und/oder Absorptionsmittelschicht gefüllten, im Gegenstrom arbeitenden Wanderbettreaktor (50) mit einem unteren horizontalen Gas-Anström- und Schüttgut-Abzugsboden (52B; 52B'), **durch** den das Abgas von unten In eine untere Schicht (54B; 54B') von bereits mit NOx und/oder N₂ sowie SOx und ggf. weiteren Schadstoffkomponenten beladenem Adsorptions- und/oder Absorptionsmittel einströmen kann,
- ein der oberen freien Oberfläche (50B') der unteren Adsorptions-und/oder Absorptionsmittelschicht nachgeordnetes Mischorgan zum innigen Mischen des von der Hauptmenge an SOx. gereinigten Abgas mit einer ammoniumhaltigen Verbindung, wie Ammoniak oder Hamstoff,
- mit einem oberen horizontalen Gas-Anström- und Schüttgut-Abzugsboden (52A; 52A') des Wanderbettreaktors ohne Absperrorgane im Bereich des oberen Gas-Anström- und Schüttgut-Abzugsbodens, **durch** den das mit der ammoniumhaltigen Verbindung gemischte, von der Hauptmenge an SOx gereinigte Abgas von unten in die obere Schicht (54A; 54A') von bereits mit NOx bzw. N₂ und geringen Mengen an SOx beladenem Adsorptions- und/oder Absorptionsmittel einströmen kann,
- mit einer oberen freien Oberfläche (50A') der oberen Adsorptions-und/oder Absorptionsmittelschicht (54A; 54A') aus der das von der Hauptmenge an SOx sowie NOx-Bestandteilen gereinigte Abgas die Adsorptions- und/oder Absorptionsmittelschicht verlassen kann um nachfolgend den Wanderbettreaktor (50) zu verlassen,
- mit einem Schüttgut-Verteilboden (60C) am oberen Ende des Wanderbettreaktors **durch** den frisches und/oder regeneriertes Adsorptions-und/oder Absorptionsmittel über der oberen freien Oberfläche der oberen Schicht des Adsorptionsmittel- und/oder Absorptionsmittels von oben zugeführt und über diese gleichmäßig verteilt werden kann,
- mit Schüttgutaustragsorganen (58; 58') der unteren Schiht des Wanderbettreaktors unterhalb des oder an dem unteren Gasanström- und Schüttgut-Abzugsboden (52B; 52B') **durch** die die Nachführung, der Abzug sowie die Wandergeschwindigkeit des Adsorptions- und/oder Absorptionsmittels erfolgt und
- mit Steuermitteln der Schüttgutaustragsorgane der unteren Schiht des Wanderbettreaktors **durch** die die Beladungsmenge des Adsorptions-und/oder Absorptionsmittels in der oberen Schicht (54; 54A') des Wanderbettreaktors mit SOx und ggf. weiteren Schadstoffkomponenten durch entsprechendes Betätigen der Schüttgutaustragsorgane (58; 58') unterhalb des oder an dem unteren Gas-Anström- und Schüttgut-Abzugsboden (52B; 52B') auf einen vorgebbaren, auf das beladene Adsorptions- und/oder Absorptionsmittel bezogenen Mengenanteil eingestellt werden kann.

17. Vorrichtung nach Anspruche 16, **dadurch gekennzeichnet, dass**, das Mischorgan zum innigen Mischen des von der Hauptmenge an SOx- und ggf. weiteren Schadstoffkomponenten gereinigten Abgas mit einer ammoniumhaitigen Verbindungen eine sich horizontal über mindestens eine Wandselte des Wanderbettreaktors erstreckende Schiltzdüse umfasst.

18. Vorrichtung nach Anspruch 16 oder 17, **gekennzeichnet durch** eine NH₃-Zugabe-Anlage (40), mit der eine Ammonium haltige Verbindung zur NOx-Umwandlung und Adsorption an einem Schüttgut hergestellt wird, mit einer Mischstelle für eine Ammonium enthaltenden Lösung, wie einer NH4OH-Lösung, und komprimierte Luft, einem Wärmeaustauscher zum Erhitzen einer weiteren Mischung aus einer Ammonium enthaltenden Lösung und Luft, und mit einer Vemebelungsdüse zum Zumischen der ersten Mischung zu der erhitzen zweiten Mischung in einem Verdampfer unter Bildung eines Luft/H2O-Dampf/NH3-Gasgemisches.

19. Vorrichtung nach einem der Ansprüche 16 bis 18, **gekennzeichnet durch** eine Regenerationsanlage für einen 3-stufigen Desorptionsprozess, In dem der mit Schadstoff beladene Aktivkoks aus dem Wanderbettreaktor (50) der vertikal erstreckten Regenerationsanlage (70) von oben zunächst **durch** einen indirekt beheizten Desorber, wie einen Röhrendesorber, geführt und nachfolgend von oben **durch** eine Nachentgasunszone unter Absaugen von desorblertem Schadgas und schließlich von oben **durch** einen indirekt gekühlten Kühler geleitet wird.

20. Vorrichtung nach einem der Ansprüche 16 bis 19, **dadurch gekennzeichnet, dass** dass dem Wanderbettreaktor (50) ein Schlauchfilter (20A) vorgeschaltet ist.

21. Vorrichtung nach einem der Ansprüche 16 bis 20, **dadurch gekennzeichnet, dass** eine Regenerationsstufe (70A) als Röhrendesorber ausgebildet ist.

22. Vorrichtung nach einem der Ansprüche 16 bis 19, **dadurch gekennzeichnet, dass** eine Regenerationsstufe (70A) eine Nachentgasungszone (70C) aufweist.

23. Vorrichtung nach einem der Ansprüche 16 bis 22, **dadurch gekennzeichnet, dass** der Wanderbettreaktor (50) doppelstöckig ausgeführt ist.

24. Vorrichtung nach einem der Ansprüche 16 bis 23, **dadurch gekennzeichnet, dass** ein dem Wanderbettreaktor (50) vorgeschalteter Schlauchfilter (20A) mit parallel geschalteten Schlauchfilterkammern(20A') vorgesehen Ist.

25. Vorrichtung nach einem der Ansprüche 16 bis 24, **dadurch gekennzeichnet, dass** der Wanderbettreaktor (50) durch eine Leitung (22) zu einem Kamln (60) bygepasst ist.

## Claims

1. A method for the purification of waste gases, in which a waste gas produced with at least partial combustion of an at least partially solid fuel contains, in addition to the components CO₂, CO, O₂, H₂O and/or N₂, at least some of the following pollutants:
NOₓ, SO, HCl, HS, Hg, dioxins, furans, dusts, and sublimatable or condensable residues from a smouldering process, heavy hydrocarbons and/or heavy metals,
**characterised in that**
- 1.1 the waste gas flows into a counter-flow moving bed reactor from below through a lower horizontal gas inflow and bulk material removal tray of the moving bed reactor, into a lower layer of adsorption and/or absorption agent already charged with NOₓ and SOₓ and/or further pollutant components, and, when passing through the lower adsorption agent and/or absorption agent layer, adsorbs at least the main quantity of SOₓ from the waste gas in the pore system of the adsorption and/or absorption agent charged with NOₓ and/or N₂,
- 1.2 the waste gas, purified of the main quantity of SOₓ and possibly of further pollutant components, leaves the lower adsorption and/or absorption agent layer at the upper free surface thereof so as to then be mixed thoroughly with an ammonium-containing compound, such as ammonia or urea, for conversion of the NOₓ,
- 1.3 the waste gas, mixed with the ammonium-containing compound and purified of the main quantity of SOₓ, enters from below through an upper horizontal gas inflow and bulk material removal tray of the moving bed reactor into an upper layer of adsorption and/or absorption agent already charged with NOₓ and/or N₂, and, when passing through the upper adsorption and/or absorption agent layer, adsorbs at least the main quantity of NOₓ constituents from the waste gas and/or their reaction products on the surface of the adsorption and/or absorption agent, charged with NOₓ and/or N₂,
- 1.4 the waste gas, purified of the main quantity of SOₓ and possibly of further pollutant components and NOₓ constituents, leaves the upper adsorption and/or absorption agent layer at the upper free surface thereof so as to then leave the moving bed reactor,
- 1.5 fresh and/or regenerated adsorption and/or absorption agent is supplied to the upper free surface of the upper layer of the adsorption and/or absorption agent, uniformly distributed from above via a bulk material distributing tray at the upper end of the moving bed reactor, without interruption by blocking elements in the region of the upper gas inflow and bulk material removal tray, then gradually migrates completely through the upper and lower layers of the entire moving bed reactor, from top to bottom, and is successively charged initially with NOₓ or N₂ and water vapour on its surface, and then with SOₓ in its pore system, and then migrates through the lower gas inflow and bulk material removal tray of the moving bed reactor,
- 1.6 the subsequent guidance, removal, and the migration rate of the adsorption agent and/or absorption agent take place via bulk material discharge elements of the lower layer of the moving bed reactor, below or on the lower gas inflow and bulk material removal tray, and
- 1.7 the charging quantity of the adsorption and/or absorption agent in the upper layer of the moving bed reactor with SOₓ is adjusted to a predefinable quantity fraction, based on the charged adsorption and/or absorption agent, by the corresponding actuation of the bulk material discharge elements of the lower layer of the moving bed reactor, below or on the lower gas inflow and bulk material removal tray.

2. The method according to claim 1, **characterised in that** the charging value of the adsorption and/or absorption agent of the moving bed reactor in the upper layer with SOₓ and possibly of further pollutant components is limited to a maximum 10 % by weight, preferably to a maximum 6 % by weight, based on the weight of the adsorption and/or absorption agent removed on the bulk material discharge elements.

3. The method according to claim 1 or 2, **characterised in that** a carbonaceous adsorption and/or absorption agent is used as the adsorption and/or absorption agent.

4. The method according to claim 3, **characterised in that** the carbonaceous adsorption and/or absorption agent is an active coke.

5. The method according to claim 3 or 4, **characterised in that** the carbonaceous adsorption and/or absorption agent has a particle size of 1 mm to 10 mm.

6. The method according to one of claims 3 to 5, **characterised in that** the consumed or partially consumed adsorption and/or absorption agent, removed from below from the moving bed reactor, is largely freed from the adsorbed and/or absorbed pollutants in a regeneration step and is fed again, at least in part, to the moving bed reactor from above in the form of adsorption and/or absorption agent alone or mixed with freshly used, carbonaceous adsorption and/or absorption agent.

7. The method according to one of claims 3 to 6, **characterised in that** a pre-activator is used as the freshly used, carbonaceous adsorption and/or absorption agent.

8. The method according to one of claims 3 to 7, **characterised in that** the gas purification takes place on the adsorption and/or absorption agent at temperatures above 80 °C.

9. The method according to one of claims 3 to 8, **characterised in that** the upper layer of the adsorption and/or absorption agent in the moving bed reactor has a height between 1.5 m and 4.5 m.

10. The method according to one of claims 3 to 9, **characterised in that** the lower layer of the adsorption and/or absorption agent in the moving bed reactor has a height between 0.5 m and 3 m.

11. The method according to one of claims 1 to 10, **characterised in that** an ammonium-containing compound for NOₓ conversion and adsorption on a bulk material is produced from a mixture of an ammonium-containing solution, such as an NH40H solution, and compressed air, said mixture, with the admixture of a heated further mixture of an ammonium-containing solution and air, being atomised in an evaporator, thus forming an air/H2O vapour/NH3 gas mixture,.

12. The method according to one of claims 1 to 11, **characterised in that** the regeneration step takes place in a 3-stage process in which the adsorption and/or absorption agent charged with pollutants is/are fed from above to the moving bed reactor in a vertically extended regeneration system, initially through an indirectly heated desorber, such as a tubular desorber, and is then conducted from above through a post-degassing zone, with the suctioning of desorbed polluting gas, and lastly is conducted from above through an indirectly cooled cooler.

13. The method according to one of claims 1 to 12, **characterised in that** a substance from the group of calcium oxide, calcium hydroxide, sodium bicarbonate, and/or the same alkali or alkaline-earth compound is added to the waste gas in a preliminary purification step, in particular, before a bag filter, for the binding of a partial quantity of the SOₓ, HS, and/or HCl.

14. The method according to claim 13, **characterised in that** the added quantity corresponds to a stoichiometry factor between 1.0 and 2.5.

15. The method according to claim 13 or 14, **characterised in that** the partial quantity of the SOₓ, HS, and/or HCl removed in the preliminary purification stage corresponds to a fraction between 10 and 90 % of the SOₓ, HS, and/or HCl contained in the waste gas.

16. An apparatus for the purification of waste gases, in which an at least partially solid fuel is sintered with at least partial combustion of the solid and exposure to a smouldering process, the waste gas containing, in addition to the components CO₂, CO, O₂, H₂O and/or N₂, at least some of the following pollutant components:
NOₓ, SO₂, HCl, Hg, dioxins, furans, dusts, and sublimatable or condensable residues from the smouldering process, heavy hydrocarbons, or heavy metals,
**characterised by**
- a counter-flow moving bed reactor (50), filled with a lower and an upper adsorption agent and/or absorption agent layer, comprising a lower horizontal gas inflow and bulk material removal tray (52B; 52B'), through which the waste gas can flow from below into a lower layer (54B; 54B') of an adsorption and/or absorption agent already charged with NOₓ and/or N₂ and SOₓ and possibly further pollutant components,
- a mixing element, arranged downstream of the upper free surface (50B') of the lower adsorption and/or absorption agent layer, for the thorough mixing of the waste gas, purified of the main quantity of SOₓ, with an ammonium-containing compound, such as ammonia or urea,
- comprising an upper, horizontal gas inflow and bulk material removal tray (52A; 52A') of the moving bed reactor, without blocking elements in the region of the upper gas inflow and bulk material removal tray, through which the waste gas, mixed with the ammonium-containing compound and purified of the main quantity of SOₓ, can flow from below into the upper layer (54A; 54A') of the adsorption and/or absorption agent already charged with NOₓ and/or N₂ and small quantities of SOₓ,
- comprising an upper free surface (50A') of the upper adsorption and/or absorption agent layer (54A; 54A') from which the waste gas, purified of the main quantity of SOₓ and NOₓ constituents, can leave the adsorption and/or absorption layer so as to then leave the moving bed reactor (50),
- comprising, at the upper end of the moving bed reactor, a bulk material distributing tray (50C) through which fresh and/or regenerated adsorption and/or absorption agent can be fed from above and uniformly distributed over the upper free surface of the upper layer of the adsorption agent and/or absorption agent,
- comprising bulk material discharge elements (58; 58') of the lower layer of the moving bed reactor below or on the lower gas inflow and bulk material removal tray (52B; 52B'), through which the subsequent guidance, removal and migration rate of the adsorption and/or absorption agent take place, and
- comprising control means of the bulk material discharge elements of the lower layer of the moving bed reactor, by means of which the charging quantity of the adsorption and/or absorption agent in the upper layer (54; 54A') of the moving bed reactor with SOₓ and possibly further pollutant components can be adjusted to a predefinable quantity fraction, based on the charged adsorption and/or absorption agent, by the corresponding actuation of the bulk material discharge elements (58; 58'), below or on the lower gas inflow and bulk material removal tray (52B; 52B').

17. The apparatus according to claim 16, **characterised in that** the mixing element for the thorough mixing of the waste gas, purified of the main quantity of SOₓ and possibly of further pollutant components, with an ammonium-containing compound comprises a slit nozzle extending horizontally over at least one wall side of the moving bed reactor.

18. The apparatus according to claim 16 or 17, **characterised by** an NH₃ addition unit (40), with which an ammonium-containing compound is produced for NOₓ conversion and adsorption on a bulk material, comprising a mixing point for an ammonium-containing solution, such as an NH40H solution, and compressed air, a heat exchanger for heating a further mixture of an ammonium-containing solution and air, and comprising a nebulisation nozzle for the admixing of the first mixture to the heated second mixture in an evaporator, thus forming an air/H2O vapour/NH3 gas mixture.

19. The apparatus according to one of claims 16 to 18, **characterised by** a regeneration unit for a 3-stage desorption process, in which the active coke charged with pollutants is initially guided from above from the moving bed reactor (50) of the vertically extended regeneration system (70) through an indirectly heated desorber, such as a tubular desorber, and is then conducted from above through a post-degassing zone, with the suctioning-off of desorbed polluting gas, and lastly is conducted from above through an indirectly cooled cooler.

20. The apparatus according to one of claims 16 to 19, **characterised in that** a bag filter (20A) is arranged upstream of the moving bed reactor (50).

21. The apparatus according to one of claims 16 to 20, **characterised in that** a regeneration stage (70A) is formed as a tubular desorber.

22. The apparatus according to one of claims 16 to 19, **characterised in that** a regeneration stage (70A) comprises a post-degassing zone (70C).

23. The apparatus according to one of claims 16 to 22, **characterised in that** the moving bed reactor (50) is formed with two levels.

24. The apparatus according to one of claims 16 to 23, **characterised in that** a bag filter (20A) arranged upstream of the moving bed reactor (50) is provided with bag filter chambers (20A') arranged in parallel.

25. The apparatus according to one of claims 16 to 24, **characterised in that** the moving bed reactor (50) is bypassed by a line (22) to a flue (60).

## Revendications

1. Procédé d'épuration de gaz de combustion, dans lequel un gaz de combustion issu de la combustion au moins partielle d'un combustible au moins partiellement solide contient, outre les composants CO₂, CO, O₂, H₂O et/ou N₂, au moins quelques-uns des composants polluants suivantes :
NOₓ, SOₓ, HCl, HS, Hg, des dioxines, des furannes, des poussières et des résidus générés par un processus de combustion sans flamme ouverte lesquels sont susceptibles de subir une sublimation ou une condensation, des hydrocarbures lourds et/ou des métaux lourds,
**caractérisé en ce que**
- 1.1 ledit gaz de combustion est introduit dans un réacteur à lit mobile fonctionnant à contre-courant, en passant par le bas et à travers un plateau horizontal inférieur d'admission de gaz et de retrait de matière en vrac dudit réacteur à lit mobile puis en entrant dans une couche inférieure d'agent d'adsorption et/ou d'absorption déjà chargée de NOₓ ainsi que de SOₓ et/ou d'autres composants polluants, et au moins l'essentiel du SOₓ issu dudit gaz de combustion est adsorbé, lors de son passage à travers ladite couche inférieure d'agent d'adsorption et/ou d'absorption, dans le système poreux dudit d'agent d'adsorption et/ou d'absorption déjà chargée de NOₓ et/ou de N₂,
- 1.2 ledit gaz de combustion épuré de l'essentiel de SOₓ et, le cas échéant, d'autres composants polluants quitte ladite couche inférieure d'agent d'adsorption et/ou d'absorption par la surface supérieure libre de cette dernière pour ensuite être mélangé intimement avec un composé contenant de l'ammonium, tels que l'ammoniac ou l'urée, afin de convertir le NOₓ,
- 1.3 ledit gaz de combustion mélangé audit composé contenant de l'ammonium et épuré de l'essentiel de SOₓ est introduit, à travers un plateau horizontal supérieur d'admission de gaz et de retrait de matière en vrac dudit réacteur à lit mobile, dans une couche supérieure d'agent d'adsorption et/ou d'absorption déjà chargée de NOₓ et/ou de N₂, et au moins l'essentiel des composants NOₓ issus dudit gaz de combustion et/ou de ces produits de réaction est adsorbé, lors de son passage à travers ladite couche supérieure d'agent d'adsorption et/ou d'absorption, à la surface dudit d'agent d'adsorption et/ou d'absorption déjà chargée de NOₓ et/ou de N₂,
- 1.4 ledit gaz de combustion, épuré de l'essentiel de SOₓ et, le cas échéant, d'autres composants polluants ainsi que de composants NOₓ, quitte ladite couche supérieure d'agent d'adsorption et/ou d'absorption par la surface supérieure libre de cette dernière pour ensuite quitter ledit réacteur à lit mobile,
- 1.5 de l'agent d'adsorption et/ou d'absorption frais et/ou régénéré est réparti de façon homogène, par le haut et à travers un plateau de répartition de matières en vrac situé à l'extrémité supérieure dudit réacteur à lit mobile, sur la surface supérieure libre de ladite couche supérieure d'agent d'adsorption et/ou d'absorption, pour traverser ensuite, sans interruption par des organes d'obturation au niveau dudit plateau supérieur d'admission de gaz et de retrait de matière en vrac, l'intégralité dudit réacteur à lit mobile en passant progressivement par lesdites couches supérieure et inférieure, en se chargeant successivement d'abord de NOₓ ou N₂ et de vapeur d'eau au niveau de sa surface puis de SOₓ au niveau de son système poreux pour traverser ensuite ledit plateau inférieur d'admission de gaz et de retrait de matière en vrac dudit réacteur à lit mobile,
- 1.6 l'approvisionnement, le retrait ainsi que la vitesse d'avancement dudit agent d'adsorption et/ou d'absorption sont assurés par des organes d'enlèvement de matières en vrac situés au niveau de la couche inférieure dudit réacteur à lit mobile, au-dessous ou sur ledit plateau inférieur d'admission de gaz et de retrait de matière en vrac, et
- 1.7 la quantité de chargement en SOₓ de l'agent d'adsorption et/ou d'absorption au sein de la couche supérieure dudit réacteur à lit mobile est ajustée à une proportion pouvant être prédéfinie et se rapportant à l'agent d'adsorption et/ou d'absorption chargé, en actionnant d'une manière appropriée lesdits organes d'enlèvement de matières en vrac situés au niveau de la couche inférieure dudit réacteur à lit mobile, au-dessous ou sur ledit plateau inférieur d'admission de gaz et de retrait de matière en vrac.

2. Procédé selon la revendication 1, **caractérisé en ce que** la valeur de chargement en SOₓ et, le cas échéant, en d'autres composants polluants de l'agent d'adsorption et/ou d'absorption dudit réacteur à lit mobile au sein la couche supérieure est limitée à 10 % en poids au maximum, de préférence à 6 % en poids au maximum, par rapport au poids de l'agent d'adsorption et/ou d'absorption retiré au niveau des organes d'enlèvement de matières en vrac.

3. Procédé selon la revendication 1 ou 2, **caractérisé en ce que** l'on utilise, en tant qu'agent d'adsorption et/ou d'absorption, un agent d'adsorption et/ou d'absorption contenant du carbone.

4. Procédé selon la revendication 3, **caractérisé en ce que** ledit agent d'adsorption et/ou d'absorption contenant du carbone est un coke actif.

5. Procédé selon la revendication 3 ou 4, **caractérisé en ce que** ledit agent d'adsorption et/ou d'absorption contenant du carbone présente une taille des particules de 1 mm à 10 mm.

6. Procédé selon l'une des revendications 3 à 5, **caractérisé en ce que** l'agent d'adsorption et/ou d'absorption usagé ou partiellement usagé qui est retiré en bas dudit réacteur à lit mobile est libéré, dans une étape de régénération, de l'essentiel des polluants absorbés et, au moins partiellement, réintroduit en haut dudit réacteur à lit mobile à titre d'agent d'adsorption et/ou d'absorption, seul ou en mélange avec de l'agent d'adsorption et/ou d'absorption contenant du carbone fraîchement mis en oeuvre.

7. Procédé selon l'une des revendications 3 à 6, **caractérisé en ce que** l'on met en oeuvre, en tant qu'agent d'adsorption et/ou d'absorption contenant du carbone fraîchement mis en oeuvre, une matière préactivée.

8. Procédé selon l'une des revendications 3 à 7, **caractérisé en ce que** l'épuration des gaz sur ledit agent d'adsorption et/ou d'absorption est réalisée à des températures supérieures à 80 °C.

9. Procédé selon l'une des revendications 3 à 8, **caractérisé en ce que** ladite couche supérieure de l'agent d'adsorption et/ou d'absorption au sein dudit réacteur à lit mobile présente une hauteur entre 1,5 m et 4,5 m.

10. Procédé selon l'une des revendications 3 à 9, **caractérisé en ce que** ladite couche inférieure de l'agent d'adsorption et/ou d'absorption au sein dudit réacteur à lit mobile présente une hauteur entre 0,5 m et 3 m.

11. Procédé selon l'une des revendications 1 à 10, **caractérisé en ce qu'**à partir d'un mélange d'une solution contenant de l'ammonium, telle qu'une solution de NH40H, et d'air comprimé, on prépare un composé contenant de l'ammonium destiné à la conversion de NOₓ et à l'adsorption sur une matière en vrac, ledit mélange étant projeté, au sein d'un dispositif d'évaporation, à travers une buse en y incorporant un mélange supplémentaire réchauffé d'une solution contenant de l'ammonium et d'air, de façon à ce qu'un mélange gazeux d'air/vapeur d'H2O/NH3 se forme.

12. Procédé selon l'une des revendications 1 à 11, **caractérisé en ce que** l'on réalise une étape de régénération dans un processus à 3 étages, dans lequel on fait passer ledit agent d'adsorption et/ou d'absorption chargé de polluants issu dudit réacteur à lit mobile, au sein d'une installation de régénération s'étendant verticalement, d'abord à travers un dispositif de désorption à chauffage indirect, tel qu'un dispositif de désorption à tubes, puis par le haut à travers une zone de dégazage ultérieur avec aspiration des polluants gazeux désorbés et, enfin, par le haut à travers un réfrigérant à refroidissement indirect.

13. Procédé selon l'une des revendications 1 à 12, **caractérisé en ce que** l'on ajoute audit gaz de combustion, dans un étage d'épuration préalable, notamment en amont d'un filtre à poches, une substance choisie dans le groupe constitué d'oxyde de calcium, d'hydroxyde de calcium et/ou de composés alcalins ou alcalino-terreux apparentés, afin de retenir une quantité partielle de SOₓ, d'HS et/ou d'HCl.

14. Procédé selon la revendication 13, **caractérisé en ce que** la quantité ajoutée correspond à un facteur stoechiométrique entre 1,0 et 2,5.

15. Procédé selon la revendication 13 ou 14, **caractérisé en ce que** ladite quantité partielle de SOₓ, d'HS et/ou d'HCl enlevée dans ledit étage d'épuration préalable correspond à une proportion entre 10 et 90 % du SOₓ, HS et/ou HCl contenu dans ledit gaz de combustion.

16. Dispositif destiné à l'épuration de gaz de combustion, dans lequel un combustible au moins partiellement solide est fritté, en réalisant une combustion au moins partielle de la matière solide et en le faisant subir un processus de combustion sans flamme ouverte, ledit gaz de combustion contenant, outre les composants CO₂, CO, O₂, H₂O et/ou N₂, au moins quelques-uns des composants polluants suivants :
NOₓ, SO₂, HCl, Hg, des dioxines, des furannes, des poussières et des résidus générés par ledit processus de combustion sans flamme ouverte lesquels sont susceptibles de subir une sublimation ou une condensation, des hydrocarbures lourds et/ou des métaux lourds,
**caractérisé par**
- un réacteur à lit mobile (50) rempli avec une couche inférieure et une couche supérieure d'agent d'adsorption et/ou d'absorption et fonctionnant à contre-courant, doté d'un plateau horizontal inférieur d'admission de gaz et de retrait de matière en vrac (52B; 52B') à travers lequel ledit gaz de combustion peut entrer, par le bas, dans une couche inférieure (54B; 54B') d'agent d'adsorption et/ou d'absorption déjà chargée de NOₓ et/ou de N₂ ainsi que de SOₓ et, le cas échéant, d'autres composants polluants,
- un organe de mélange, situé en aval de la surface supérieure libre (50B') de ladite couche inférieure d'agent d'adsorption et/ou d'absorption, destiné au mélange intime du gaz de combustion épuré de l'essentiel de SOₓ avec un composé contenant de l'ammonium, tel que l'ammoniac ou l'urée,
- avec un plateau horizontal supérieur d'admission de gaz et de retrait de matière en vrac (52A; 52A') dudit réacteur à lit mobile qui, au niveau dudit plateau supérieur d'admission de gaz et de retrait de matière en vrac, est dépourvu d'organes d'obturation, ledit plateau pouvant permettre d'introduire, par le bas, ledit gaz de combustion, mélangé avec ledit composé contenant de l'ammonium et épuré de l'essentiel de SOₓ, dans la couche supérieure (54A; 54A') d'agent d'adsorption et/ou d'absorption déjà chargé de NOₓ et/ou de N₂ et de petites quantités de SOₓ,
- avec une surface supérieure libre (50A') de la couche supérieure d'agent d'adsorption et/ou d'absorption (54A; 54A') par laquelle ledit gaz de combustion épuré de l'essentiel de SOₓ ainsi que de composants NOₓ peut quitter ladite couche d'agent d'adsorption et/ou d'absorption pour quitter ensuite le réacteur à lit mobile (50),
- avec un plateau de répartition de matières en vrac (50C) situé à l'extrémité supérieure dudit réacteur à lit mobile, par lequel on peut acheminer, par le haut, de l'agent d'adsorption et/ou d'absorption frais et/ou régénéré au-dessus de la surface supérieure libre de ladite couche supérieure d'agent d'adsorption et/ou d'absorption pour le répartir de façon homogène à travers celle-ci,
- avec des organes d'enlèvement de matières en vrac (58; 58') de ladite couche inférieure dudit réacteur à lit mobile, situés au-dessous ou sur ledit plateau inférieur d'admission de gaz et de retrait de matière en vrac (52B; 52B') par lesquels l'approvisionnement, le retrait ainsi que la vitesse d'avancement dudit agent d'adsorption et/ou d'absorption sont assurés, et
- avec des moyens de commande desdits organes d'enlèvement de matières en vrac de ladite couche inférieure dudit réacteur à lit mobile, lesquels permettent d'ajuster la quantité de chargement en SOₓ et, le cas échéant, en d'autres composants polluants de l'agent d'adsorption et/ou d'absorption au sein de la couche supérieure (54; 54A') dudit réacteur à lit mobile à une proportion pouvant être prédéfinie et se rapportant à l'agent d'adsorption et/ou d'absorption chargé, en actionnant d'une manière appropriée lesdits organes d'enlèvement de matières en vrac (58; 58') situés au-dessous ou sur ledit plateau inférieur d'admission de gaz et de retrait de matière en vrac (52B; 52B').

17. Procédé selon la revendication 16, **caractérisé en ce que** ledit organe de mélange destiné au mélange intime dudit gaz de combustion épuré de l'essentiel de SOₓ et, le cas échéant, d'autres composants polluants avec un composé contenant de l'ammonium, comprend une buse en forme de fente qui s'étend horizontalement à travers au moins une paroi latérale dudit réacteur à lit mobile.

18. Dispositif selon la revendication 16 ou 17, **caractérisé par** une installation d'ajout de NH₃ (40) avec laquelle un composé contenant de l'ammonium destiné à la conversion de NOₓ et à l'adsorption sur une matière en vrac est préparée, pourvue d'un site de mélange pour une solution contenant de l'ammonium, telle qu'un solution de NH40H, et pour l'air comprimé, d'un échangeur de chaleur destiné au réchauffement d'un mélange supplémentaire d'une solution contenant de l'ammonium et d'air, et d'une buse de nébulisation destinée mélanger le premier mélange au deuxième mélange réchauffé au sein d'un dispositif d'évaporation, pour ainsi former un mélange gazeux d'air/vapeur d'H2O/NH3.

19. Dispositif selon l'une des revendications 16 à 18, **caractérisé par** une installation de régénération destinée à un processus de désorption à 3 étages, dans lequel on fait passer ledit coke actif chargé de polluants issu dudit réacteur à lit mobile (50), par le haut, dans ledit installation de régénération (70) s'étendant verticalement, d'abord à travers un dispositif de désorption à chauffage indirect, tel qu'un dispositif de désorption à tubes, puis par le haut à travers une zone de dégazage ultérieur avec aspiration des polluants gazeux désorbés et, enfin, par le haut à travers un réfrigérant à refroidissement indirect.

20. Dispositif selon l'un des revendications 16 à 19, **caractérisé en ce qu'**un filtre à poches (20A) est prévu en amont dudit réacteur à lit mobile (50).

21. Dispositif selon l'une des revendications 16 à 20, **caractérisé en ce que** l'étage de régénération (70A) est réalisé sous forme d'un dispositif de désorption à tubes.

22. Dispositif selon l'une des revendications 16 à 19, **caractérisé en ce que** l'étage de régénération (70A) comporte une zone de dégazage ultérieur (70C).

23. Dispositif selon l'un des revendications 16 à 22, **caractérisé en ce que** le réacteur à lit mobile (50) est réalisé à deux niveaux.

24. Dispositif selon l'un des revendications 16 à 23, **caractérisé en ce qu'**un filtre à poches (20A) situé en amont du réacteur à lit mobile (50) est prévu avec des chambres de filtre à poches (20A') disposées en parallèle.

25. Dispositif selon l'une des revendications 16 à 24, **caractérisé en ce que** le réacteur à lit mobile (50) dispose, par une ligne (22), d'une liaison en court-circuit à une cheminée (60).
